(19) Europäisches Patentamt
European Patent Office
Office européen des brevets

(11) Veröffentlichungsnummer: **0 070 254**
**B1**

(12) **EUROPÄISCHE PATENTSCHRIFT**

(45) Veröffentlichungstag der Patentschrift: **16.10.85**

(21) Anmeldenummer: **82810286.3**

(22) Anmeldetag: **05.07.82**

(51) Int. Cl.⁴: **G 03 C 1/06**, G 03 C 1/10, G 03 C 5/30, C 07 F 9/46, C 07 F 9/48, C 07 F 9/65 // G03C5/16, G03C5/52

# (54) Entwicklungsbeschleuniger enthaltendes photographisches Material.

(30) Priorität: **10.07.81 CH 4545/81**

(43) Veröffentlichungstag der Anmeldung: **19.01.83 Patentblatt 83/3**

(45) Bekanntmachung des Hinweises auf die Patenterteilung: **16.10.85 Patentblatt 85/42**

(84) Benannte Vertragsstaaten: **BE CH DE FR GB IT LI NL**

(56) Entgegenhaltungen:
**EP - A - 0 004 026**
**US - A - 3 825 629**

(73) Patentinhaber: **CIBA-GEIGY AG, Postfach, CH-4002 Basel (CH)**

(72) Erfinder: **Fryberg, Mario, Dr., Dery-le-Mont, CH-1724 Praroman-le-Mouret (CH)**
Erfinder: **Weiss, Viktor, Rte de Bonlieu 16, CH-1700 Fribourg (CH)**

**EP 0 070 254 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft photographisches Aufzeichnungsmaterial, das in mindestens einer Silberhalogenidemulsionsschicht oder in einer an die Silberhalogenidemulsionsschicht angrenzenden Kolloidschicht mindestens einen Entwicklungsbeschleuniger enthält.

Es ist bekannt, die Empfindlichkeit photographischer Silberhalogenidemulsionen durch Zusatz von Entwicklungsbeschleunigern oder chemischen Sensibilisatoren indirekt oder direkt zu erhöhen. Solche Verbindungen sind beispielsweise in der britischen Patentschrift 1 430 998 sowie in der deutschen Offenlegungsschrift 26 27 878 beschrieben. Jedoch haben diese Verbindungen vielfach nur eine sehr schwache empfindlichkeitssteigernde Wirkung. Sie neigen ferner zur Schleierbildung und besitzen oft sehr geringe chemische und thermische Stabilität.

Aufgabe der vorliegenden Erfindung ist somit die Bereitstellung von neuen photographischen Aufzeichnungsmaterialien bzw. Entwicklungsbädern, die Entwicklungsbeschleuniger enthalten, welche eine hohe empfindlichkeitssteigernde Wirkung besitzen, ohne dabei die genannten Nachteile zu zeigen.

Es wurden nun Phosphorverbindungen für die Verwendung in Schichten photographischer Materialien sowie Entwicklungsbäder gefunden, die dem Aufzeichnungsmaterial die gewünschten Eigenschaften verleihen.

Gegenstand der vorliegenden Erfindung ist daher ein photographisches Aufzeichnungsmaterial, das in mindestens einer Silberhalogenidemulsionsschicht oder in einer an diese Schicht angrenzenden Kolloidschicht mindestens einen Entwicklungsbeschleuniger enthält, dadurch gekennzeichnet, dass der Entwicklungsbeschleuniger der Formel

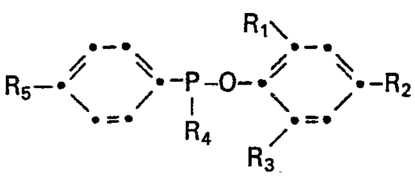 (1)

entspricht, worin

$R_1$, $R_2$ und $R_3$ unabhängig voneinander Wasserstoff, Alkyl mit je 1 bis 16 Kohlenstoffatomen oder gegebenenfalls substituiertes Alkoxy mit je 1 bis 18 Kohlenstoffatomen sind, und $R_2$ zusätzlich einen Rest der Formel

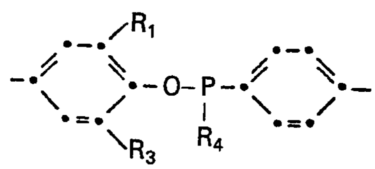

bedeutet, worin $R_1$ und $R_3$ die oben angegebene Bedeutung haben,

$R_4$ gegebenenfalls substituiertes Phenoxy oder gegebenenfalls substituiertes Amino und

$R_5$ ein Rest der Formel

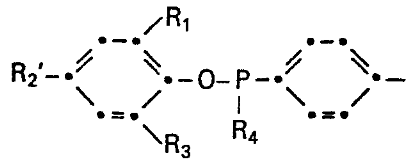

ist, worin $R_1$, $R_3$ und $R_4$ die angegebenen Bedeutungen haben, und

$R_2'$ dieselben Bedeutungen hat wie $R_1$ und $R_3$, oder $R_5$ Wasserstoff bedeutet, wenn $R_2$ ein Rest der Formel

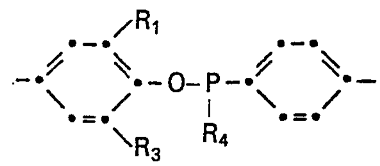

ist.

Gegenstand der vorliegenden Erfindung ist auch photographisches Aufzeichnungsmaterial, das in mindestens einer Silberhalogenidemulsionsschicht oder in einer an diese Schicht angrenzenden Kolloidschicht mindestens einen Entwicklungsbeschleuniger enthält, dadurch gekennzeichnet, dass der Entwicklungsbeschleuniger der Formel

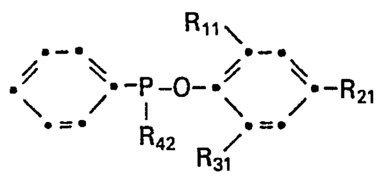 (3a)

entspricht, worin

$R_{42}$ ein Rest der Formel

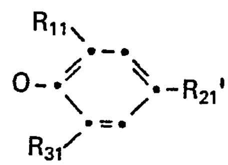

ist, worin $R_{11}$, $R_{21}'$ und $R_{31}$ unabhängig voneinander Wasserstoff, Alkyl mit je 1 bis 12 Kohlenstoffatomen oder gegebenenfalls mit Alkoxycarbonyl mit 2 bis 5 Kohlenstoffatomen substituiertes Alkoxy mit 1 bis 4 Kohlenstoffatomen sind, oder $R_{42}$ ein Rest der Formel

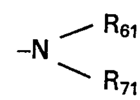

ist, worin $R_{61}$ und $R_{71}$ unabhängig voneinander Alkyl mit je 1 bis 18 Kohlenstoffatomen, Cyclopentyl, Cyclohexyl, mit Alkyl mit 1 bis 8 Kohlenstoffatomen substituiertes Phenyl oder ein Rest der Formel

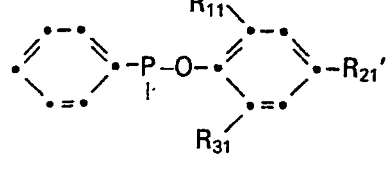

sind, worin $R_{11}$, $R_{21}'$ und $R_{31}$ die oben angegebenen Bedeutungen haben, oder $R_{61}$ und $R_{71}$ zusammen mit dem Stickstoffatom, an das sie gebunden sind, Reste der Formel

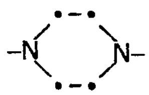 oder 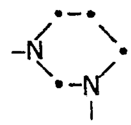

bilden, die an dem weiteren Stickstoffatom mit einem Rest der Formel

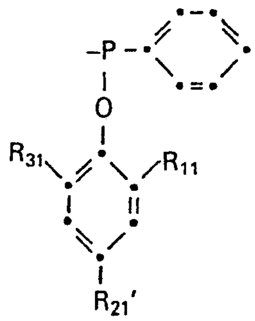

substituiert sind, worin $R_{11}$, $R_{21}'$ und $R_{31}$ die oben angegebenen Bedeutungen haben,

$R_{21}$ dieselbe Bedeutung hat wie $R_{11}$ und $R_{31}$ und zusätzlich ein Rest der Formel

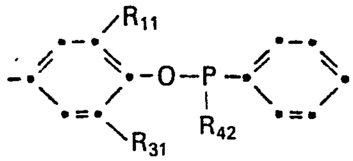

ist, worin $R_{11}$, $R_{31}$ und $R_{42}$ die oben angegebenen Bedeutungen haben.

Gegenstand der Erfindung ist ferner photographisches Aufzeichnungsmaterial, das in mindestens einer Silberhalogenidemulsionsschicht oder in einer an diese Schicht angrenzenden Kolloidschicht mindestens einen Entwicklungsbeschleuniger enthält, dadurch gekennzeichnet, dass der Entwicklungsbeschleuniger eine Verbindung mit wiederkehrenden Einheiten der Formel

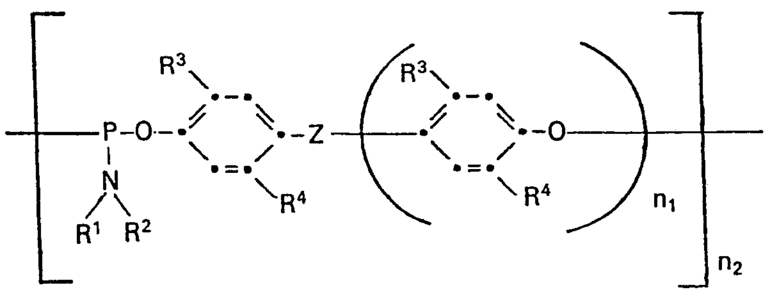 (7)

ist, worin

$R^1$ und $R^2$ unabhängig voneinander Alkyl mit je 1 bis 12 Kohlenstoffatomen oder gegebenenfalls mit Alkyl mit 4 bis 8 Kohlenstoffatomen substituiertes Phenyl und

$R^3$ und $R^4$ unabhängig voneinander Wasserstoff oder Alkyl mit je 1 bis 8 Kohlenstoffatomen sind,

Z Sauerstoff oder Schwefel,

$n_1$ 0, 1 oder 2, und

$n_2$ eine ganze Zahl von 1 bis 100 ist.

Als Endgruppen für die Polymeren der Formel (7) können z.B. substituierte Phenolreste oder Reste der Formel 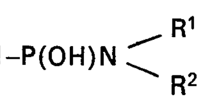

in Frage kommen, worin $R^1$ und $R^2$ die oben angegebenen Bedeutungen haben.

Gegenstand ist auch photographisches Aufzeichnungsmaterial, das in mindestens einer Silberhalogenidemulsionsschicht oder in einer an diese Schicht angrenzenden Kolloidschicht mindestens einen Entwicklungsbeschleuniger enthält, dadurch gekennzeichnet, dass der Entwicklungsbeschleuniger der Formel

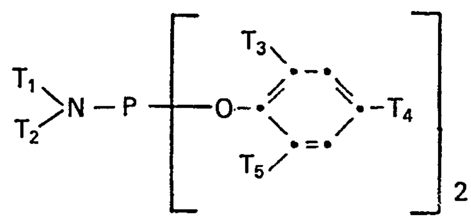 (8)

entspricht, worin

$T_1$ Alkyl mit 1 bis 12 Kohlenstoffatomen und

$T_2$ ein Rest der Formel

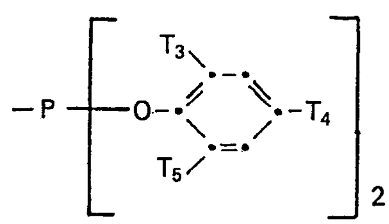

ist, oder

$T_1$ und $T_2$ gegebenenfalls substituiertes Alkylen mit 4 bis 12 Kohlenstoffatomen sind oder zusammen mit dem Stickstoffatom, an das sie gebunden sind, Reste der Formeln

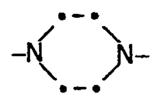 oder 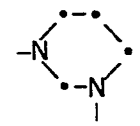

bilden, die an dem weiteren Stickstoffatom mit einem Rest der Formel

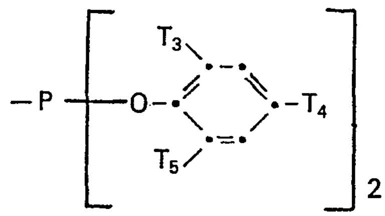

substituiert sind, und

$T_3$, $T_4$ und $T_5$ unabhängig voneinander Wasserstoff oder Alkyl mit je 1 bis 12 Kohlenstoffatomen sind.

Ein weiterer Gegenstand betrifft die in den photographischen Aufzeichnungsmaterialien enthaltenen Entwicklungsbeschleuniger der Formeln (1) bis (10).

Gegenstand ist auch die Verwendung der photographischen Aufzeichnungsmaterialien zur Herstellung von photographischen Bildern.

Gegenstand ist ferner ein Entwicklungsbad, das die Entwicklungsbeschleuniger der Formeln (1) bis (10) enthält, für photographische Aufzeichnungsmaterialien.

Ein weiterer Gegenstand betrifft ein Verfahren zur Herstellung photographischer Aufzeichnungsmaterialien, die die Entwicklungsbeschleuniger der Formeln (1) bis (10) enthalten.

Gegenstand sind ferner die Verbindungen der Formeln (11) bis (14). Die Verbindungen der Formeln (11) unterscheiden sich durch die besonderen Bedingungen für die Alkylsubstituenten an den Phenoxyresten von den Phosphonitderivaten gemäss EP-A-0 004 026.

Die Substituenten $R_1$, $R_2$ und $R_3$ in der Verbindung der Formel (1) bedeuten, neben Wasserstoff, Alkyl mit je 1 bis 16 Kohlenstoffatomen. Die Alkylketten können unverzweigt oder, vorzugsweise, verzweigt sein. Geeignete Alkylreste sind z.B. Methyl, Äthyl, Propyl, i-Propyl, Butyl, i-Butyl, tert.-Butyl, Pentyl, tert.-Pentyl (1,1-Dimethylpropyl), 1,1,3,3-Tetramethylbutyl, 1-Methyläthylpentyl, Hexyl, 1-Methylpentyl, Neopentyl, 1-, 2- oder 3-Methylhexyl, Heptyl, n-Octyl, tert.-Octyl, 2-Äthylhexyl, n-Nonyl, Isononyl, tert.-Nonyl, Decyl, tert.-Decyl, Undecyl; ferner Dodecyl, Tetradecyl und Hexadecyl sowie die dazugehörenden Isomeren.

Hiervon sind solche Reste mit 1 bis 12, insbesondere mit 1 bis 8 Kohlenstoffatomen bevorzugt. Besonders geeignet sind Alkylreste mit 4 bis 8 Kohlenstoffatomen und insbesondere deren verzweigte Isomere.

Bedeuten $R_1$, $R_2$ und $R_3$ Alkoxy, so kommen Alkoxyreste mit je 1 bis 18 Kohlenstoffatomen in Frage. Geeignete Reste leiten sich von den oben für $R_1$, $R_2$ und $R_3$ angegebenen Alkylresten ab. Zusätzlich können Octadecyl sowie dazugehörende Isomere in Betracht kommen. Alkoxyreste mit 1 bis 14 Kohlenstoffatomen sind besonders bevorzugt. Die Alkoxyreste können z.B. mit weiteren Alkoxyresten mit 1 bis 4 Kohlenstoffatomen, Phenoxy oder Alkoxycarbonyl mit 2 bis 5, insbesondere 2 oder 3 Kohlenstoffatomen substituiert sein.

Der Substituent $R_2$ bedeutet zusätzlich ein Rest der Formel

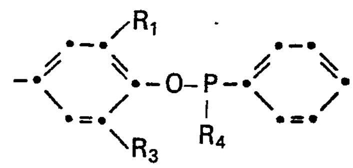

worin $R_1$ und $R_3$ die oben angegebenen Bedeutungen haben.

Die Substituenten $R_1$, $R_2$ und $R_3$ können unabhängig voneinander die oben für sie aufgezählten Bedeutungen besitzen.

$R_4$ bedeutet gegebenenfalls substituiertes Phenoxy. Der Phenoxyrest kann in den ortho-Stellungen und der para-Stellung substituiert sein und der Formel

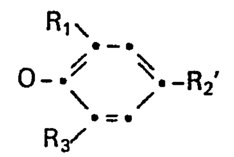

entsprechen, worin $R_1$ und $R_3$ die oben angegebenen Bedeutungen haben. Der Rest $R_2'$ hat dieselben Bedeutungen wie $R_1$ und $R_3$.

$R_4$ ist ferner der Rest eines substituierten Amins, das sich z.B. durch den Rest

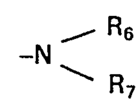

darstellen lässt. Darin bedeuten $R_6$ und $R_7$ Alkyl mit je 1 bis 24 Kohlenstoffatomen. Beispiele geeigneter Alkylreste sind oben für $R_1$, $R_2$ und $R_3$ angegeben. Ferner kommen Octadecyl, Nonadecyl, Eicosyl, Dokosyl, Tetrakosyl sowie deren Isomere in Frage. $R_6$ und $R_7$ bedeuten ferner Cycloalkyl mit 5 bis 8 Kohlenstoffatomen. Cyclopentyl und Cyclohexyl sind besonders bevorzugt. $R_6$ und $R_7$ bedeuten auch Phenyl. Der Phenylrest ist gegebenenfalls mit Alkyl mit 4 bis 8 Kohlenstoffatomen, vorzugsweise in der (den) ortho-Stellung(en) und/oder der para-Stellung, substituiert. Ferner bedeuten $R_6$ und $R_7$ ein Rest der Formel

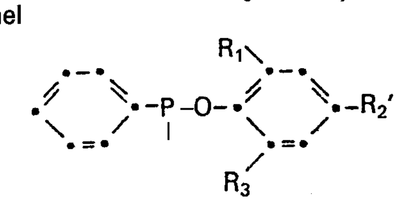

worin $R_1$, $R_2'$ und $R_3$ die oben angegebenen Bedeutungen haben. $R_6$ und $R_7$ bilden ferner mit dem Stickstoffatom, an das sie gebunden sind,

gegebenenfalls substituierte heterocyclische Reste, die vorzugsweise Stickstoffatome enthalten, insbesondere der Formeln

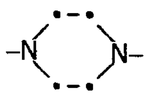

oder

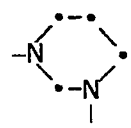

wobei die freien Valenzen der Stickstoffatome mit einem Rest der Formel

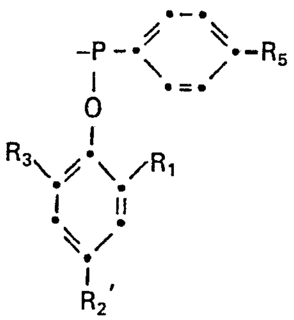

abgesättigt sind, worin $R_1$, $R_2'$ und $R_3$ die oben angegebenen Bedeutungen haben.

Die Substituenten $R_6$ und $R_7$ können unabhängig voneinander die oben für sie angegebenen Bedeutungen besitzen.

Der Substituent $R_5$ bedeutet einen Rest der Formel

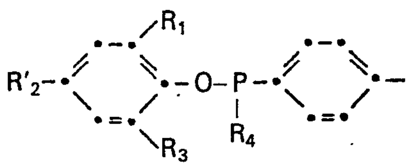

worin $R_1$, $R_2'$, $R_3$ und $R_4$ die oben angegebenen Bedeutungen haben. Wenn $R_2$ ein Rest der Formel

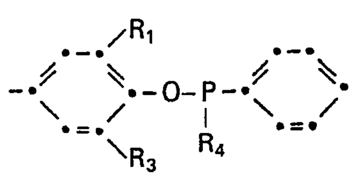

ist, bedeutet $R_5$ Wasserstoff.

In den Verbindungen der Formel (3) kann der dem Substituenten $R_5$ entsprechende Substituent $R_{51}$ aber auch Wasserstoff bedeuten, ohne dass eine weitere Bedingung erfüllt sein muss.

Für die Reste $R^1$, $R^2$, $R^3$ und $R^4$ in den Verbindungen der Formel (7) sind solche Alkylgruppen geeignet, wie sie bereits in den Erläuterungen für $R_1$ in Formel (1) aufgeführt sind. Vorzugsweise sind $R^1$ und $R^2$ unabhängig voneinander Alkyl mit je 4 bis 10 Kohlenstoffatomen, $R^3$ und $R^4$ Wasserstoff oder Alkyl mit 4 bis 8 Kohlenstoffatomen, Z ist vorzugsweise Sauerstoff, $n_1$ 0 und $n_2$ eine ganze Zahl von 10 bis 20.

Geeignete Alkylreste für die Reste $T_1$, $T_3$, $T_4$ und $T_5$ in den Verbindungen der Formel (8) sind solche, die bereits in den Erläuterungen von z.B. $R_1$ aufgeführt sind. Vorzugsweise ist $T_1$ Alkyl mit 1 bis 6 Kohlenstoffatomen, $T_3$, $T_4$ und $T_5$ sind vorzugsweise Wasserstoff oder jeweils Alkyl mit 4 bis 8 Kohlenstoffatomen. Die durch $T_1$ und $T_2$ gebildeten Alkylenreste können z.B. mit Alkylgruppen wie z.B. Methyl, Äthyl oder tert.-Butyl substituiert sein.

Bevorzugte Entwicklungsbeschleuniger entsprechen der Formel

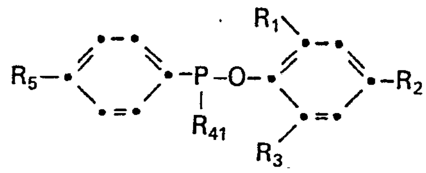

(2)

worin

$R_{41}$ ein Rest der Formel

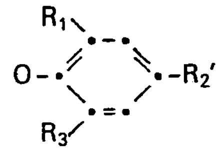

worin $R_1$, $R_2'$ und $R_3$ die oben angegebenen Bedeutungen haben, oder ein Rest der Formel

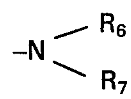

ist, worin $R_6$ und $R_7$ unabhängig voneinander Alkyl mit je 1 bis 24 Kohlenstoffatomen, Cyclopentyl, Cyclohexyl, gegebenenfalls substituiertes Phenyl oder ein Rest der Formel

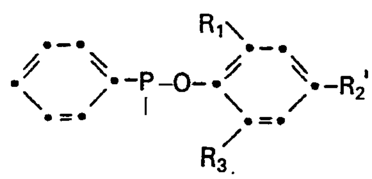

sind, worin $R_1$, $R_2'$ und $R_3$ die oben angegebenen Bedeutungen haben, oder $R_6$ und $R_7$ zusammen mit dem Stickstoffatom, an das sie gebunden sind, Reste der Formeln

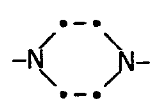

oder

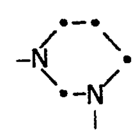

bilden, die an dem weiteren Stickstoffatom mit einem Rest der Formel

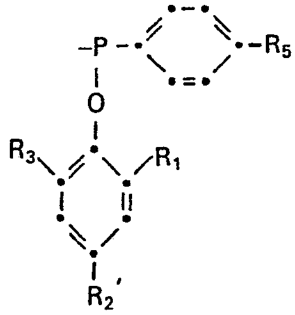

substituiert sind, worin $R_1$, $R_2'$, $R_3$ und $R_5$ die oben angegebenen Bedeutungen haben.

Besonders geeignete Entwicklungsbeschleuniger sind solche der Formel

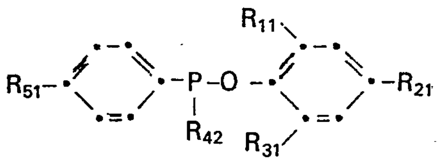

(3)

worin

$R_{42}$ ein Rest der Formel

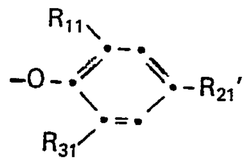

ist, worin $R_{11}$, $R_{21}'$ und $R_{31}$ unabhängig voneinander Wasserstoff, Alkyl mit je 1 bis 12 Kohlenstoffatomen oder gegebenenfalls mit Alkoxycarbonyl mit 2 bis 5 Kohlenstoffatomen substituiertes Alkoxy mit 1 bis 14 Kohlenstoffatomen sind, oder $R_{42}$ ein Rest der Formel

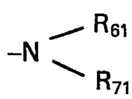

ist, worin $R_{61}$ und $R_{71}$ unabhängig voneinander Alkyl mit je 1 bis 18 Kohlenstoffatomen, Cyclopentyl, Cyclohexyl, mit Alkyl mit 1 bis 8 Kohlenstoffatomen substituiertes Phenyl oder ein Rest der Formel

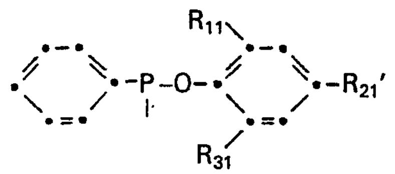

sind, worin $R_{11}$, $R_{21}'$ und $R_{31}$ die oben angegebenen Bedeutungen haben, oder $R_{61}$ und $R_{71}$ zusammen mit dem Stickstoffatom an das sie gebunden sind, Reste der Formeln

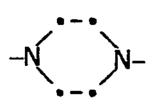 oder 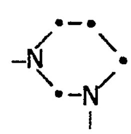

bilden, die an dem weiteren Stickstoffatom mit einem Rest der Formel

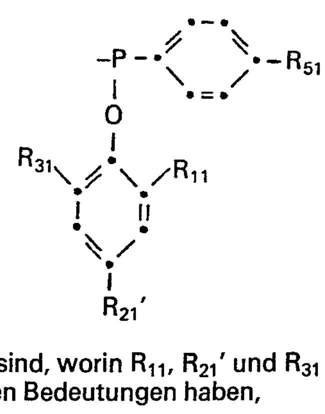

substituiert sind, worin $R_{11}$, $R_{21}'$ und $R_{31}$ die oben angegebenen Bedeutungen haben,

$R_{21}$ dieselbe Bedeutung hat wie $R_{11}$ und $R_{31}$ und zusätzlich ein Rest der Formel

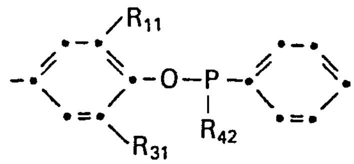

ist, worin $R_{11}$, $R_{31}$ und $R_{42}$ die oben angegebenen Bedeutungen haben, und

$R_{51}$ ein Rest der Formel

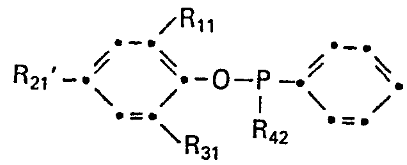

ist, worin $R_{11}$, $R_{21}'$, $R_{31}$ und $R_{42}$ die oben angegebenen Bedeutungen haben, oder $R_{51}$ Wasserstoff bedeutet, wenn $R_{21}$ ein Rest der Formel

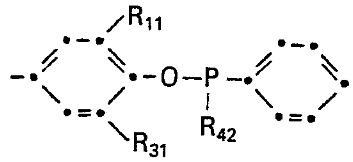

ist.

Bevorzugt sind ferner Entwicklungsbeschleuniger der Formel

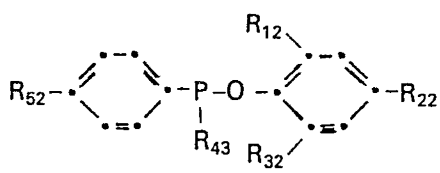

(4)

worin

$R_{43}$ ein Rest der Formel

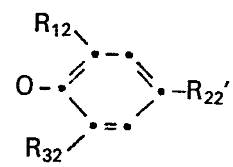

worin $R_{12}$, $R_{22}'$ oder $R_{32}$ unabhängig voneinander Wasserstoff, Alkyl mit je 1 bis 8 Kohlenstoffatomen oder gegebenenfalls mit Alkoxycarbonyl mit 2 oder 3 Kohlenstoffatomen substituiertes Alkoxy mit 1 bis 14 Kohlenstoffatomen sind, oder $R_{43}$ ein Rest der Formel

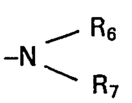

ist, worin $R_{62}$ und $R_{72}$ unabhängig voneinander Alkyl mit je 1 bis 12 Kohlenstoffatomen oder ein Rest der Formel

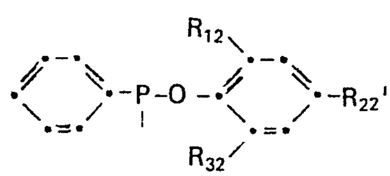

sind, worin $R_{12}$, $R_{22}'$ und $R_{32}$ die oben angegebenen Bedeutungen haben, oder $R_{62}$ und $R_{72}$ zusammen mit dem Stickstoffatom, an das sie gebunden sind, einen Rest der Formel

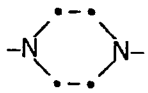

bilden, der an dem weiteren Stickstoffatom mit einem Rest der Formel

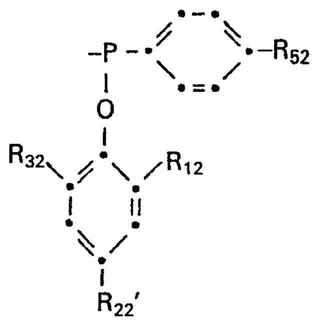

substituiert ist, worin $R_{12}$, $R_{22}'$ und $R_{32}$ die oben angegebenen Bedeutungen haben,

$R_{22}$ dieselbe Bedeutung hat wie $R_{12}$ und $R_{32}$ und zusätzlich ein Rest der Formel

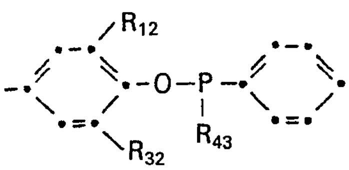

ist, worin $R_{12}$, $R_{32}$ und $R_{43}$ die oben angegebenen Bedeutungen haben, und

$R_{52}$ ein Rest der Formel

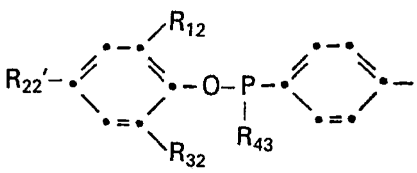

ist, worin $R_{12}$, $R_{22}'$, $R_{32}$ und $R_{43}$ die oben angegebenen Bedeutungen haben oder $R_{52}$ Wasserstoff ist, wenn $R_{22}$ ein Rest der Formel

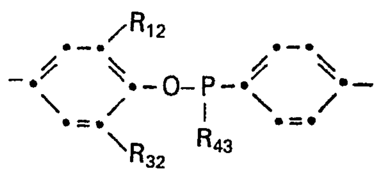

ist.

Von Interesse sind auch Entwicklungsbeschleuniger der Formel

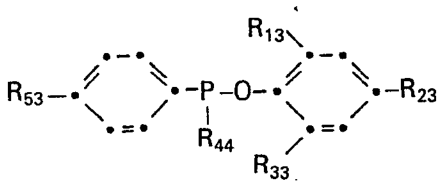 (5)

worin

$R_{44}$ ein Rest der Formel

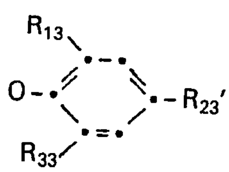

worin $R_{13}$, $R_{23}'$ und $R_{33}$ unabhängig voneinander Wasserstoff, Alkyl mit je 4 bis 8 Kohlenstoffatomen oder gegebenenfalls mit Alkoxycarbonyl mit 2 oder 3 Kohlenstoffatomen substituiertes Alkoxy mit 1 bis 14 Kohlenstoffatomen sind, oder $R_{44}$ ein Rest der Formel

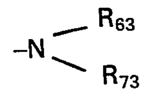

ist, worin $R_{63}$ und $R_{73}$ unabhängig voneinander Alkyl mit je 1 bis 8 Kohlenstoffatomen oder ein Rest der Formel

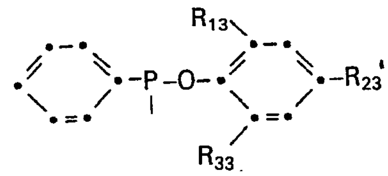

sind, worin $R_{13}$, $R_{23}'$ und $R_{33}$ die oben angegebenen Bedeutungen haben, oder $R_{63}$ und $R_{73}$ zusammen mit dem Stickstoffatom, an das sie gebunden sind, einen Rest der Formel

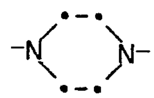

bilden, der an dem weiteren Stickstoffatom mit einem Rest der Formel

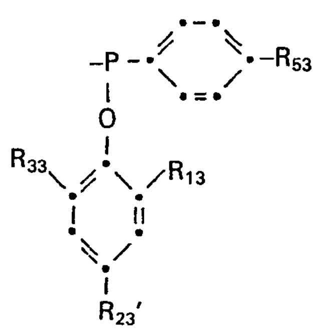

substituiert ist, worin $R_{13}$, $R_{23}'$ und $R_{33}$ die oben angegebenen Bedeutungen haben,

$R_{23}$ dieselbe Bedeutung hat wie $R_{13}$ und $R_{33}$ und zusätzlich ein Rest der Formel

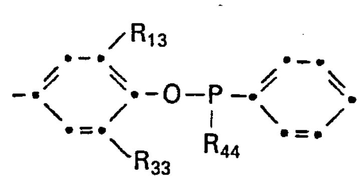

ist, worin $R_{13}$, $R_{33}$ und $R_{44}$ die oben angegebenen Bedeutungen haben, und

$R_{53}$ ein Rest der Formel

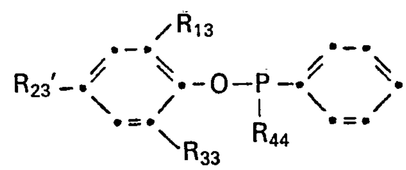

ist, worin $R_{13}$, $R_{23}'$, $R_{33}$ und $R_{44}$ die oben angegebenen Bedeutungen haben, oder $R_{53}$ Wasserstoff ist, wenn $R_{23}$ ein Rest der Formel

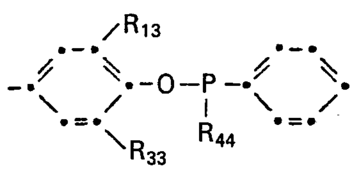

ist.

Wertvolle Entwicklungsbeschleuniger der Formel (3) entsprechen der Formel

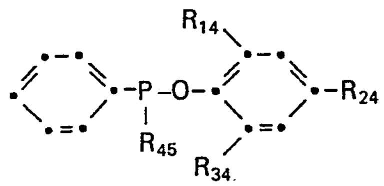
(6)

worin

$R_{45}$ ein Rest der Formel

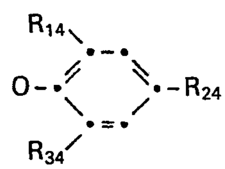

worin $R_{14}$ und $R_{34}$ unabhängig voneinander Wasserstoff oder Alkyl mit je 4 bis 8 Kohlenstoffatomen sind, und $R_{24}$ Wasserstoff, Alkyl mit je 4 bis 8 Kohlenstoffatomen oder gegebenenfalls mit Alkoxycarbonyl mit 2 oder 3 Kohlenstoffatomen substituiertes Alkoxy mit 1 bis 14 Kohlenstoffatomen ist, oder $R_{45}$ ein Rest der Formel

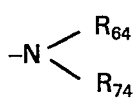

ist, worin $R_{64}$ und $R_{74}$ unabhängig voneinander Alkyl mit je 1 bis 8 Kohlenstoffatomen oder ein Rest der Formel

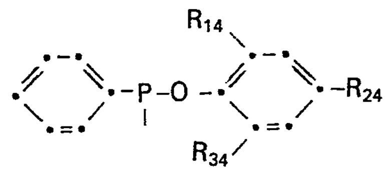

sind, worin $R_{14}$, $R_{24}$ und $R_{34}$ die oben angegebenen Bedeutungen haben, oder $R_{63}$ und $R_{73}$ zusammen mit dem Stickstoffatom, an das sie gebunden sind, einen Rest der Formel

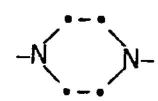

bilden, der mit einem Rest der Formel

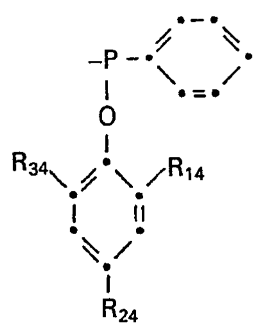

substituiert ist, worin $R_{14}$, $R_{24}$ und $R_{34}$ die oben angegebenen Bedeutungen haben.

Ferner sind Entwicklungsbeschleuniger geeignet, die wiederkehrende Einheiten der Formel

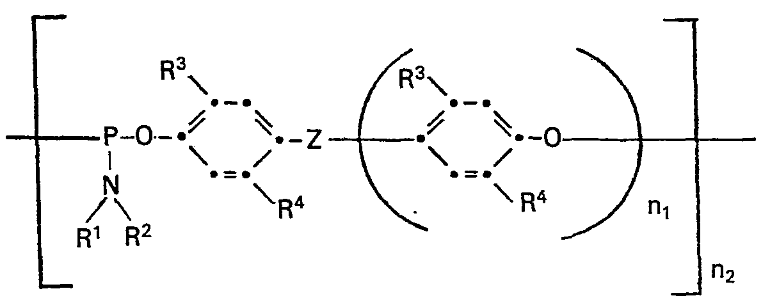
(7)

enthalten, worin

$R^1$ und $R^2$ unabhängig voneinander Alkyl mit je 1 bis 12 Kohlenstoffatomen oder gegebenenfalls mit Alkyl mit 4 bis 8 Kohlenstoffatomen substituiertes Phenyl und

$R^3$ und $R^4$ unabhängig voneinander Wasserstoff oder Alkyl mit je 1 bis 8 Kohlenstoffatomen sind,

Z Sauerstoff oder Schwefel,

$n_1$ 0, 1 oder 2 und

$n_2$ eine ganze Zahl von 1 bis 100 ist.

Ferner sind auch Entwicklungsbeschleuniger geeignet, die der Formel

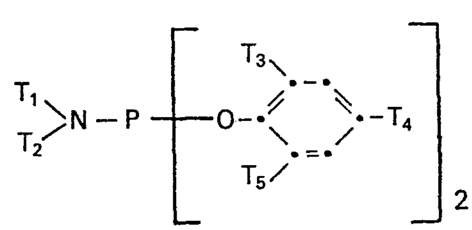
(8)

entsprechen, worin

$T_1$ Alkyl mit 1 bis 12 Kohlenstoffatomen und

$T_2$ ein Rest der Formel

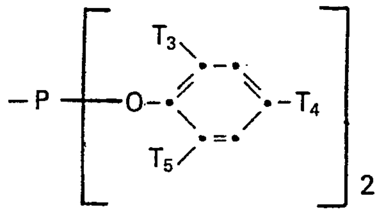

ist, oder

$T_1$ und $T_2$ gegebenenfalls substituiertes Alkylen mit 4 bis 12 Kohlenstoffatomen sind oder zusammen mit dem Stickstoffatom, an das sie gebunden sind, Reste der Formeln

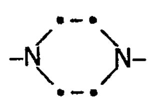

oder

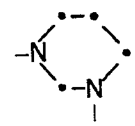

bilden, die an dem weiteren Stickstoffatom mit einem Rest der Formel

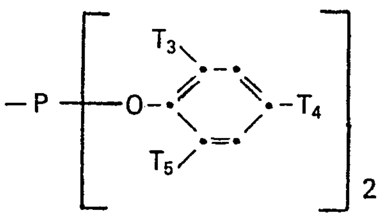

substituiert sind, und

$T_3$, $T_4$ und $T_5$ unabhängig voneinander Wasserstoff oder Alkyl mit je 1 bis 12 Kohlenstoffatomen sind.

Geeignete Entwicklungsbeschleuniger der Formel (8) sind solche der Formel

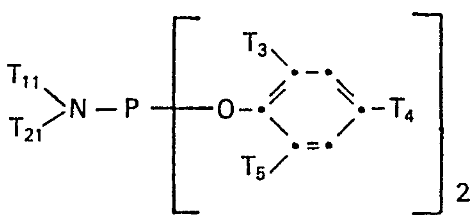

(9)

worin

$T_{11}$ Alkyl mit 1 bis 6 Kohlenstoffatomen,

$T_{21}$ ein Rest der Formel

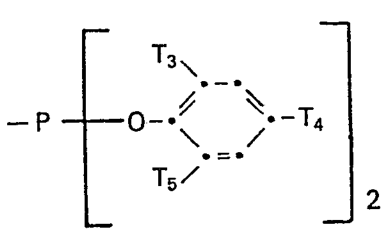

ist, oder

$T_{11}$ und $T_{21}$ eine Gruppe der Formel $-C(CH_3)_2CH_2CH_2CH_2C(CH_3)_2-$ sind, oder zusammen mit dem Stickstoffatom, an das sie gebunden sind, einen Rest der Formel

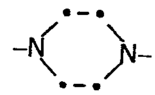

bilden, der an dem weiteren Stickstoffatom mit einem Rest der Formel

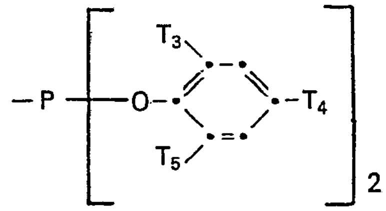

substituiert ist, und

$T_3$, $T_4$ und $T_5$ die oben angegebenen Bedeutungen haben.

Geeignete Entwicklungsbeschleuniger der Formel (9) sind solche der Formel

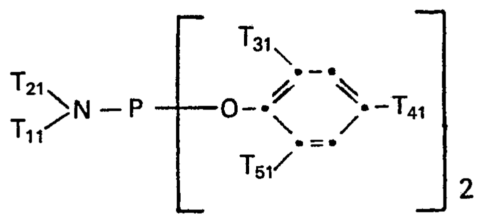

(10)

worin

$T_{31}$, $T_{41}$ und $T_{51}$ jeweils Wasserstoff oder Alkyl mit je 4 bis 8 Kohlenstoffatomen sind, und $T_{11}$ und $T_{21}$ die oben angegebenen Bedeutungen haben.

Die erfindungsgemäss verwendeten Entwicklungsbeschleuniger werden in Kontakt mit der Silberhalogenidemulsionsschicht verwendet. Das heisst, sie müssen während der Entwicklung in der Emulsionsschicht anwesend sein. Dies kann entweder dadurch erreicht werden, dass man die Verbindungen in die Emulsionsschicht vor der Belichtung einarbeitet oder dass man ihnen die Möglichkeit gibt, aus einem Entwicklerbad in die Emulsionsschicht einzudiffundieren. Dies ist möglich, da die Entwicklungsbeschleuniger gegen Hydrolyse stabil sind und deshalb über längere Zeit gelöst in einem Verarbeitungsbad vorliegen können. Das Einbringen der Verbindungen direkt in die Silberhalogenidemulsion ist bevorzugt. Man kann entweder wässrige Lösungen dieser Verbindungen verwenden oder Lösungen in einem organischen Lösungsmittel, das die photographischen Eigenschaften des lichtempfindlichen Materials nicht beeinflusst. Sollen die Entwicklungsbeschleuniger im Entwicklerbad verwendet werden, so wählt man vorzugsweise eine Konzentration von 0,5 bis 10 g pro Liter Lösung.

Die erfindungsgemäss verwendeten empfindlichkeitssteigernden Verbindungen können der Emulsion zu verschiedenen Zeitpunkten der Emulsionsherstellung zugefügt werden. Man kann sie beispielsweise einzeln oder gemischt mit anderen üblichen Zusätzen während der physikalischen oder chemischen Reifung oder zu irgend einem anderen Zeitpunkt vor dem Vergiessen der Emulsion zugeben. Am zweckmässigsten geschieht dies jedoch nach der chemischen Reifung und kurz vor dem Vergiessen der Emulsion.

Die zugesetzte Menge richtet sich nach der gewählten Verbindung sowie nach der Art des für die Silberhalogenidemulsion verwendeten kolloidalen Bindemittels. Im allgemeinen werden die Verbindungen gemäss vorliegender Erfindung in einer Menge von 1 bis 50 g pro Mol Silberhalogenid verwendet.

Zur Einarbeitung der Verbindungen in die Silberhalogenidemulsionen können die üblichen Methoden angewandt werden. Sie können z.B. aus Lösungen in kaum mit Wasser mischbaren, hochsiedenden Lösungsmitteln, z.B. Di-n-butylnaphthalat und Tricresylphosphat, oder in kaum mit Wasser mischbaren, niedrigsiedenden Lösungsmitteln, wie Äthylacetat, Methylenchlorid, Chloroform usw. oder deren Mischungen, eingearbeitet werden. Zu diesem Zweck werden diese Lösungen in ausserordentlich feinen Tröpfchen, vorzugsweise in Gegenwart eines Netz- oder Dispergiermittels, in dem hydrophilen, kolloidalen Medium dispergiert. Das sich kaum mit Wasser mischende, niedrigsiedende Lösungsmittel wird dann abgedampft. Natürlich kann jede andere dem Fachmann bekannte Technik, Additive in Kolloidmischungen einzuarbeiten, angewendet werden. Es können z.B. die wasserlöslichen Substanzen, die eine wasserlöslichmachende Sulfogruppe (in Säure- oder Salzform) enthalten, in die Giesszusammensetzung der in Frage kommenden Schicht aus einer wässrigen oder alkalischen Lösung eingearbeitet werden.

Die hydrophile Kolloidzusammensetzung, in der die erfindungsgemässen Verbindungen dispergiert oder gelöst werden, braucht nicht unbedingt die Giesszusammensetzung der Silberhalogenidemulsionsschicht selbst zu sein, in der sie enthalten sein sollten. Die Verbindungen können vorteilhafterweise erst in einer wässrigen, lichtunempfindlichen, hydrophilen Kolloidlösung dispergiert oder gelöst werden, worauf die entstandene Mischung gegebenenfalls nach Entfernen der organischen Lösungsmittel mit der Giesszusammensetzung der lichtempfindlichen Silberhalogenidemulsionsschicht kurz vor dem Auftragen eingehend gemischt wird.

So können z.B. homopolymere oder copolymere Latices gegebenenfalls in Gegenwart eines organischen Lösungsmittels mit den erfindungsgemässen Verbindungen beladen werden. Das so erhaltene Gemisch wird dann vor dem Auftrag der lichtempfindlichen Silberhalogenidemulsion zugemischt.

Aufgrund ihrer Eigenschaft, die Entwickelbarkeit photographischer Schichten zu unterstützen, eignen sich die erfindungsgemäss verwendeten Verbindungen vorzüglich zur Steigerung von z.B. der Röntgenlichtempfindlichkeit sowie der allgemeinen Lichtempfindlichkeit, sowohl von orthochromatischen, panchromatischen und anderen speziellen Emulsionen, als auch von konventionellen spektral nicht sensibilisierten Emulsionen. Die Substanzen können diesen Emulsionen entweder getrennt oder gemeinsam mit den üblichen Sensibilisierungsfarbstoffen zugesetzt werden. Es sei noch erwähnt, dass die beschriebenen Vorteile der erfindungsgemäss angewandten Verbindungen sowohl Negativ- als auch Positivemulsionen betreffen.

Vorteilhaft sind die neuen Verbindungen für die Entwicklung lichtempfindlicher Materialien, die für die Wiedergabe graphischer Darstellungen bestimmt sind.

Im Silberfarbbleichverfahren, wo nach einer ersten Schwarzweissentwicklung mit Hilfe des entstandenen Silberbildes der eingelagerte Farbstoff bildmässig proportional der Silbermenge ausgebleicht wird, haben sich die erfindungsgemässen Verbindungen ganz besonders bewährt. In ihrer Gegenwart werden nach der Belichtung des Materials erheblich grössere Mengen an Silber entwickelt, was sich dann in einer besseren und vollständigeren Bleichung des Farbstoffes auswirkt. Durch die bessere Ausnützung des eingegossenen Silbers lassen sich somit erhebliche Mengen an Silber einsparen.

Als Entwickler kommen die dem Fachmann bekannten Entwicklersubstanzen in Frage. Die Verarbeitung entspricht den üblicherweise für das entsprechende photographische Material angewandten Methoden.

Herstellungsbeispiele

Beispiel 1: 262 g (1.0 m) 2,4,6-Tri-tert.-butylphenol werden in 600 ml Triäthylamin auf 70–75 °C erwärmt. Unter Stickstoff und unter Ausschluss von Feuchtigkeit tropft man während 2 Stunden 179 g (1.0 m) P,P-Dichlor-phenylphosphin zu. Anschliessend hält man das Reaktionsgemisch während 20 Stunden bei 80–90 °C. Nach Digerieren des Reaktionsgemisches mit 2000 ml Petroläther nutscht man das Triäthylammoniumchlorid ab. Das Filtrat wird zur Trockne eingedampft und der Rückstand (rotbraunes Öl) in Acetonitril umkristallisiert. Man erhält 311 g farblose Kristalle eines Zwischenproduktes mit dem Schmelzpunkt 93–96 °C (Zers.).

60,6 g (0,15 m) dieses Zwischenproduktes werden mit 19,4 g (0,15 m) Di-n-butyl-amin in 250 ml Toluol in Gegenwart von 30 ml Triäthylamin und 1 ml Dimethylformamid unter Feuchtigkeitsausschluss während 24 Stunden auf 90 °C erwärmt. Das Reaktionsgemisch wird mit Wasser extrahiert und dann zur Trockne eingedampft. Man erhält als Rückstand 68 g orangefarbenes Öl, welches in Äthanol umkristallisiert wird. Man erhält 46 g farblose Kristalle (62%), Fp. 80–82 °C (Zers.) der Verbindung der Formel

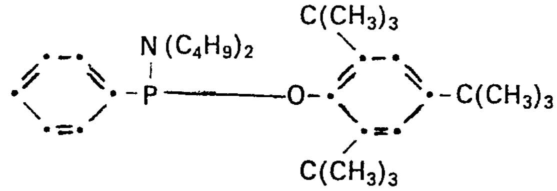

(100)

Gemäss Beispiel 1 können auch die folgenden Verbindungen hergestellt werden:

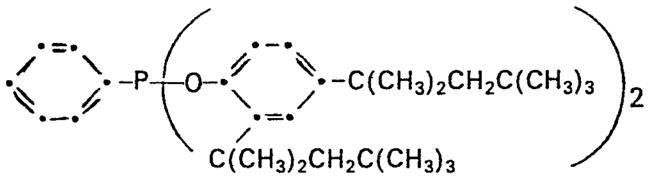

; farbloses Öl (101)

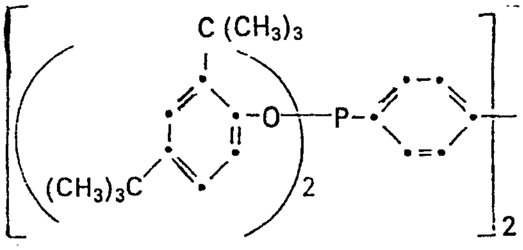

; Fp. 79–81 °C (102)

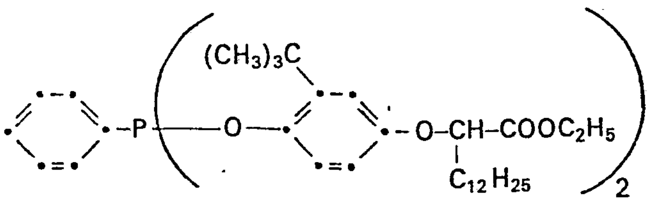

; gelbliches Öl (103)

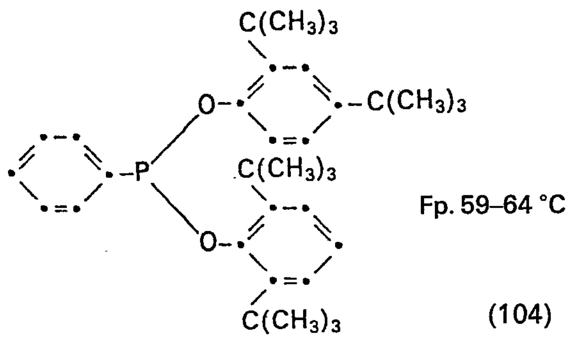

Fp. 59–64 °C (104)

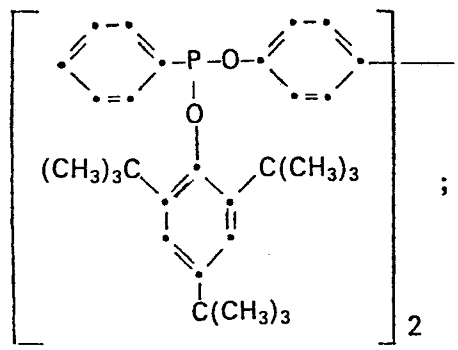

; Fp. 114,5–117,0 °C (105)

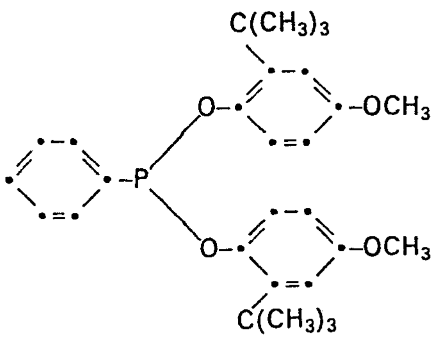

; Fp. 81–82,5 °C (106)

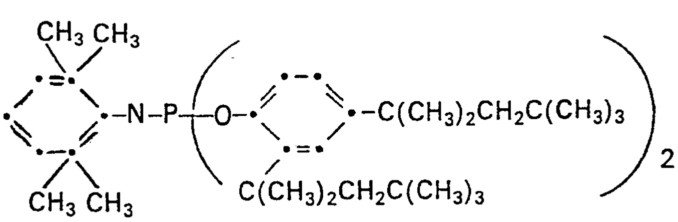

; Fp. 111–114 °C (107)

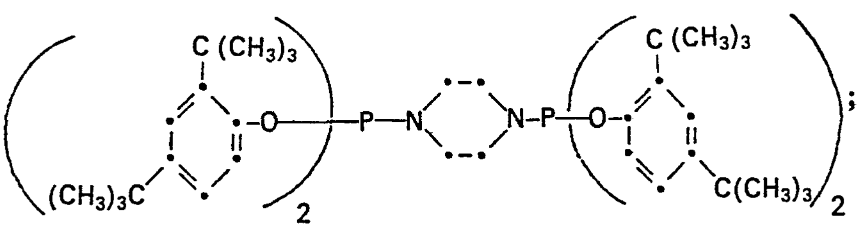

Fp. 96–99 °C (108)

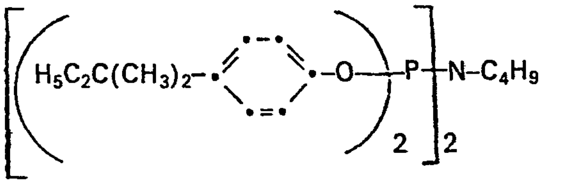

;

Fp. 58–64 °C (109)

Beispiel 2: In 200 ml Toluol wurden 11,5 g Di-tert.-butylhydrochinon und 14,3 ml Triäthylamin vorgelegt. Dazu gibt man bei Raumtemperatur eine Lösung von 12,1 g N',N'-di-[2-ethyl-hexan]-amino-di-chlor-phosphin in 60 ml Toluol. Das Gemisch wird am Rückfluss während 20 Stunden erwärmt. Danach wird auf Raumtemperatur abgekühlt, das entstandene Salz abfiltriert und das Filtrat eingeengt. Das erhaltene Harz wird mit heissem Acetonitril gewaschen, abgenutscht, pulverisiert und getrocknet. Dem erhaltenen Produkt lässt sich auf Grund des NMR-Spektrums die folgende Strukturformel zuordnen:

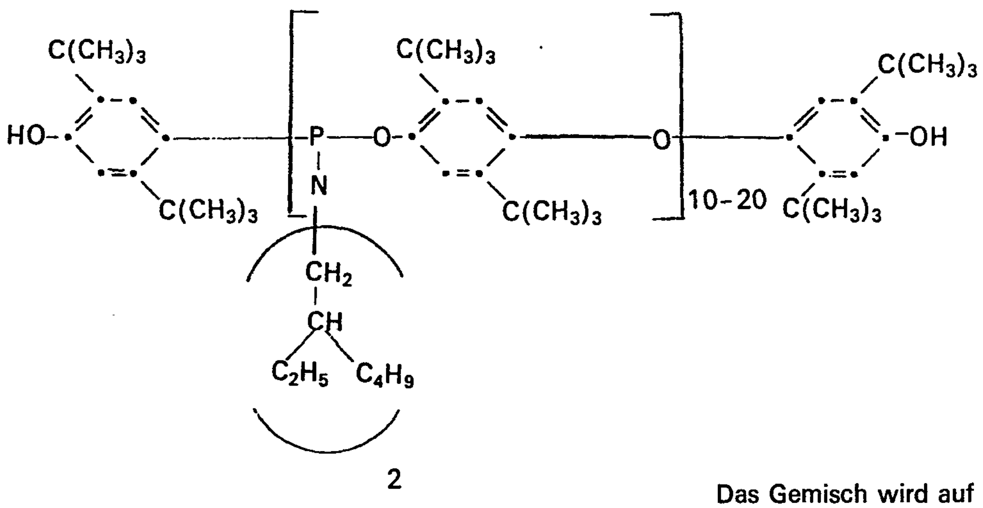

(107)

Das Produkt sintert bei 150–200 °C.

Anwendungsbeispiele

Beispiel 3: Die in der folgenden Tabelle 1 angegebenen Mengen an Entwicklungsbeschleuniger werden jeweils in einem Gemisch von 534 mg Trikresylphosphat und 20 ml Äthylacetat gelöst. Dazu gibt man 140 ml einer wässrigen 6%igen Gelatinelösung sowie 1 ml einer 0,8%igen Lösung von Diisobutylnaphthalinsulfonsäure (Natriumsalz). Das Gemisch wird 5 Minuten mit einem Ultraschallgerät emulgiert. Dazu gibt man eine Silberhalogenidemulsion mit einem Silbergehalt von insgesamt 0,6 g Silber sowie eine wässrige Lösung des Härters der Formel

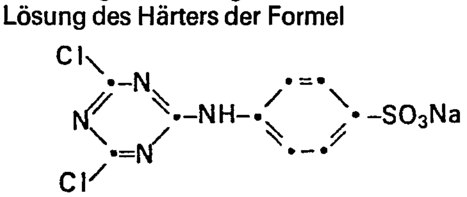

Das Gemisch wird auf polyäthylenbeschichtetem Papier bei etwa 40 °C vergossen und bei Raumtemperatur getrocknet.

Die Probe wird unter einem 5-Stufenkeil ($\Delta$=0.15) mit 200 Lux belichtet und wie folgt verarbeitet:

3 Minuten Entwicklung
1 Minute Wässern
3 Minuten Fixieren
4 Minuten Wässern, anschliessend getrocknet.

Die verwendeten Verarbeitungsbäder weisen die üblichen in der Photographie bekannten Zusammensetzung auf.

Man erhält Schwarzweissabbildungen des Keils mit den in Tabelle 1 beschriebenen Kenngrössen.

Tabelle 1

| Probe | Entwicklungsbeschleuniger (Verbindung Nr.) | | Eingegossene Menge an Entwicklungsbeschleuniger [mg] | Gemessene Graudichten bei Stufen × · 1000 1 | 2 | 3 | 4 |
|---|---|---|---|---|---|---|---|
| 1. | Nullprobe | | 0 | 39 | 62 | 78 | 81 |
| 2. | 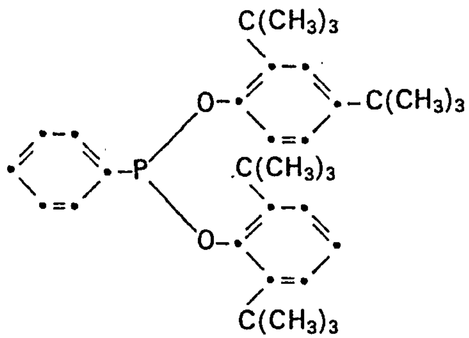 | (104) | 173 | 62 | 82 | 93 | 93 |
| 3. | 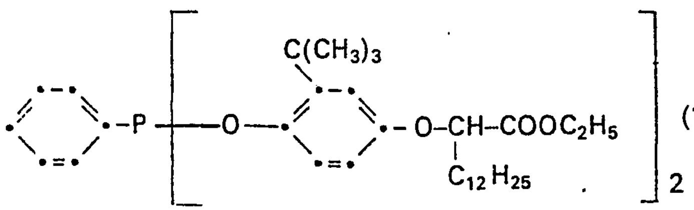 | (103) | 324 | 67 | 86 | 94 | 99 |
| 4. | 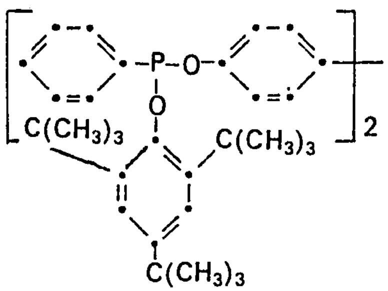 | (105) | 158 | 79 | 94 | 100 | 107 |

Aus dieser Tabelle geht eindeutig hervor, dass über den ganzen Belichtungsbereich in Gegenwart der erfindungsgemässen Verbindungen bei gleicher Belichtung und Entwicklung höhere Silberdichten erreicht werden.

Beispiel 4: Es werden Güsse entsprechend Beispiel 3 hergestellt, jedoch mit den in Tabelle 2 angegebenen Entwicklungsbeschleunigern. Die Proben werden unter einem 5-Stufenkeil mit 200 Lux zwei Sekunden belichtet und wie in Beispiel 3 verarbeitet. Auf den einzelnen Stufen wird das entwickelte, metallische Silber röntgenfluorimetrisch bestimmt. Die erhaltenen Resultate sind in Tabelle 2 zusammengestellt.

Tabelle 2

| Probe | Entwicklungsbeschleuniger (Verbindung Nr.) | | Eingegossene Menge an Entwicklungsbeschleuniger [mg] | Gemessene Menge Silber in mg auf Stufe 1 | 2 | 3 | 4 |
|---|---|---|---|---|---|---|---|
| 1. | Nullprobe | | 0 | 129 | 276 | 371 | 365 |
| 2. | 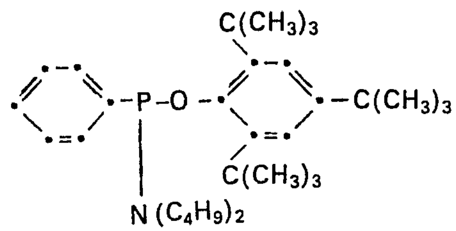 | (100) | 170 | 253 | 368 | 400 | 435 |
| 3. | 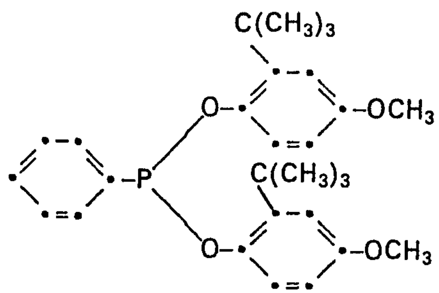 | (106) | 157 | 271 | 366 | 417 | 423 |
| 4. | 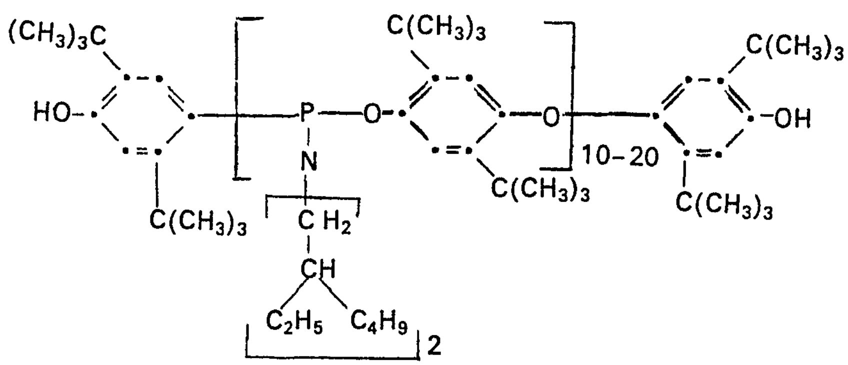 | (107) | 158 | 289 | 411 | 499 | 529 |

Es werden in allen Stufen bei Zugabe von Entwicklungsbeschleunigern unter gleichen Bedingungen höhere entwickelte Silbermengen gemessen.

Beispiel 5: Es werden Güsse entsprechend Beispiel 3 hergestellt, die jedoch als weitere Komponente den Farbstoff der Formel

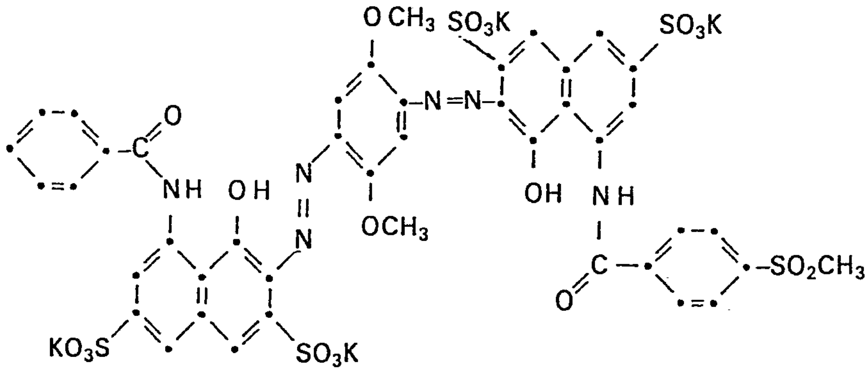

(201)

enthalten. Zusätzlich wird zur Kontrolle eine Probe ohne Entwicklungsbeschleuniger hergestellt.

Diese Proben werden unter einem 21-Stufenkeil mit 500 Lux 2 Sekunden belichtet und bei 30 °C wie folgt verarbeitet:

| | |
|---|---|
| 1. Entwickeln | 3 Minuten |
| 2. Wässern | 1 Minute |
| 3. Farbbleichen | 3 Minuten |
| 4. Wässern | 1 Minute |
| 5. Fixieren | 3 Minuten |
| 6. Wässern | 4 Minuten |

Die Verarbeitungsbäder 1 und 5 haben die üblichen Zusammensetzungen. Das Farbbleichbad 3 ist jedoch wie folgt zusammengesetzt.

1950 ml Wasser
56 ml konz. Schwefelsäure
2 ml Mercaptobernsteinsäure
18 g Natriumjodid
12 g 4-Nitrophenol-2-sulphonsäure-Dinatriumsalz
2 g 6-Methoxy-2,3-dimethyl-chinoxalin

Tabelle 3

| Probe | Entwicklungsbeschleuniger (Verbindung Nr.) | | Eingesetzte Menge an Entwicklungsbeschleuniger [mg] | Dichte gemessen auf Stufe × · 100 | | | | | | |
|---|---|---|---|---|---|---|---|---|---|---|
| | | | | 1 | 3 | 6 | 9 | 12 | 15 | 20 |
| 1. | Nullprobe | | 0 | 24 | 67 | 126 | 202 | 245 | 254 | 243 |
| 2. | 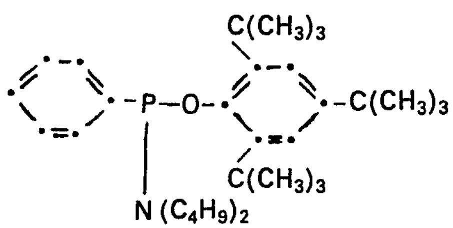 | (100) | 170 | 3 | 15 | 74 | 128 | 193 | 235 | 246 |
| 3 | 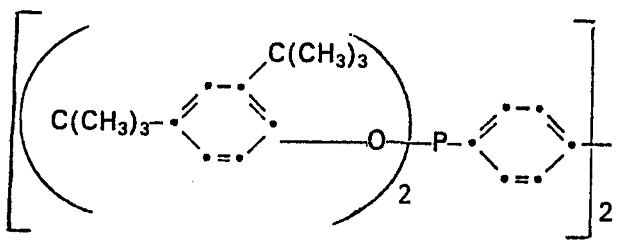 | (102) | 177 | 5 | 18 | 84 | 135 | 200 | 240 | 242 |

Man erhält klare, scharfe Blaugrünkeile mit einem Absorptionsmaximum von 618 nm und den in Tabelle 3 angegebenen Dichten.

Aus diesem Vergleich geht hervor, dass bei Zugabe von Entwicklungsbeschleuniger der eingegossene Farbstoff über den ganzen Belichtungsbereich infolge grösserer Mengen entwickelten Silbers in grösserem Masse gebleicht wird.

Beispiel 6: Es werden Güsse gemäss Beispiel 5 hergestellt. Pro Gramm eingegossenem Silber werden 258 mg des Entwicklungsbeschleunigers der Formel (102) verwendet. Zur Kontrolle wird eine Probe ohne Entwicklungsbeschleuniger hergestellt.

Die Proben werden unter einem kontinuierlichen Keil mit 500 Lux 2 Sekunden belichtet und gemäss Beispiel 5 verarbeitet, jedoch mit dem Unterschied, dass die Farbbleichung während verschiedenen Zeitspannen durchgeführt wird.

Man erhält Blaugrünkeile mit einem Absorptionsmaximum von 618 nm und einer Maximaldichte von 2.2. Aus Kurven, denen die Farbdichte in Abhängigkeit von der Lichtmenge zu entnehmen ist, wurde diejenige Lichtmenge log E (0,6) bestimmt, die zur Entwicklung von soviel Silber benötigt wird, um eine Farbdichte von 0,6 zu erhalten.

Da das Ausmass der Farbbleichung der Menge an entwickeltem Silber proportional ist, kann man auf diese Weise auf die Empfindlichkeit des jeweils vorliegenden photographischen Materials schliessen. Die folgenden Resultate werden erhalten:

Tabelle 4

| Probe | Dauer der Farbbleichung (sec) | log E (0,6) ohne Beschleuniger | log E (0,6) mit Beschleuniger |
|---|---|---|---|
| 1 | 32 | 0,81 | 0,68 |
| 2 | 45 | 0,80 | 0,65 |
| 3 | 64 | 0,75 | 0,65 |
| 4 | 90 | 0,74 | 0,64 |
| 5 | 127 | 0,75 | 0,63 |
| 6 | 180 | 0,73 | 0,64 |
| 7 | 254 | 0,70 | 0,64 |

Durch Einarbeiten des Entwicklungsbeschleunigers in das photographische Material wird also unabhängig von der Farbbleichzeit bei sonst gleicher Belichtung und Entwicklung die Empfindlichkeit des Materials erhöht.

**Patentansprüche**

1. Photographisches Aufzeichnungsmaterial, das in mindestens einer Silberhalogenidemulsionsschicht oder in einer an diese Schicht angrenzenden Kolloidschicht mindestens einen Entwicklungsbeschleuniger enthält, dadurch gekennzeichnet, dass der Entwicklungsbeschleuniger der Formel

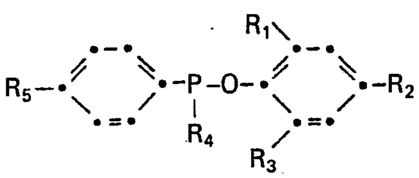

(1)

entspricht, worin

$R_1$, $R_2$ und $R_3$ unabhängig voneinander Wasserstoff, Alkyl mit je 1 bis 16 Kohlenstoffatomen oder gegebenenfalls substituiertes Alkoxy mit je 1 bis 18 Kohlenstoffatomen sind, und $R_2$ zusätzlich einen Rest der Formel

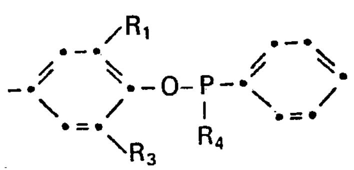

bedeutet, worin $R_1$ und $R_3$ die oben angegebene Bedeutung haben,

$R_4$ gegebenenfalls substituiertes Phenoxy oder gegebenenfalls substituiertes Amino und

$R_5$ ein Rest der Formel

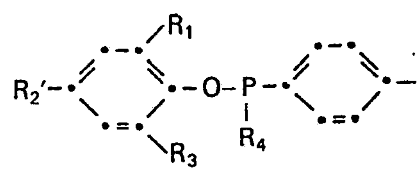

ist, worin $R_1$, $R_3$ und $R_4$ die angegebenen Bedeutungen haben, und $R_2'$ dieselben Bedeutungen hat wie $R_1$ und $R_3$, oder $R_5$ Wasserstoff ist, wenn $R_2$ ein Rest der Formel

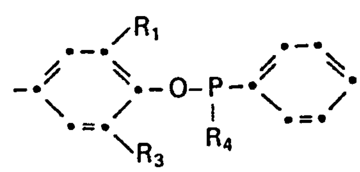

ist.

2. Photographisches Aufzeichnungsmaterial nach Anspruch 1, dadurch gekennzeichnet, dass der Entwicklungsbeschleuniger der Formel

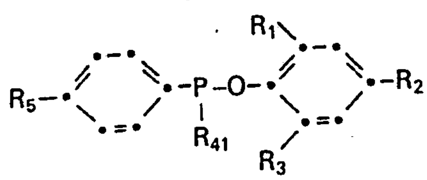

(2)

entspricht, worin

$R_{41}$ ein Rest der Formel

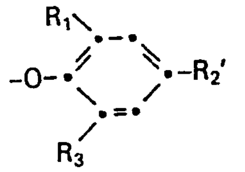

worin $R_1$, $R_2'$ und $R_3$ die in Anspruch 1 angegebenen Bedeutungen haben, oder ein Rest der Formel

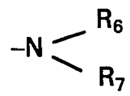

ist, worin $R_6$ und $R_7$ unabhängig voneinander Alkyl mit je 1 bis 24 Kohlenstoffatomen, Cyclopentyl, Cyclohexyl, gegebenenfalls substituiertes Phenyl oder ein Rest der Formel

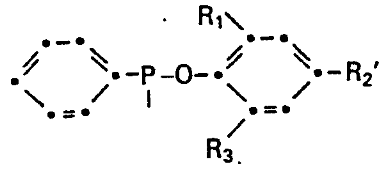

sind, worin $R_1$, $R_2'$ und $R_3$ die in Anspruch 1 angegebenen Bedeutungen haben, oder $R_6$ und $R_7$ zusammen mit dem Stickstoffatom, an das sie gebunden sind, Reste der Formeln

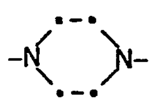 oder 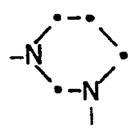

bilden, die an dem weiteren Stickstoffatom mit einem Rest der Formel

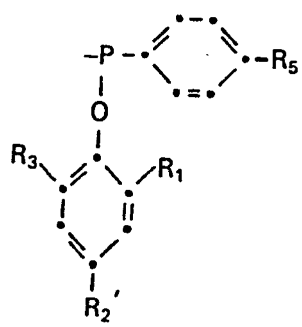

substituiert sind, worin $R_1$, $R_2'$, $R_3$ und $R_5$ die oben angegebenen Bedeutungen haben.

3. Photographisches Aufzeichnungsmaterial nach Anspruch 2, dadurch gekennzeichnet, dass der Entwicklungsbeschleuniger der Formel

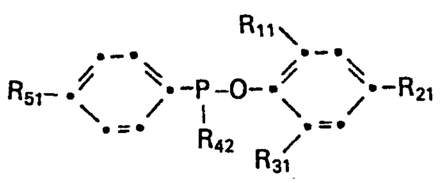 (3)

entspricht, worin

$R_{42}$ ein Rest der Formel

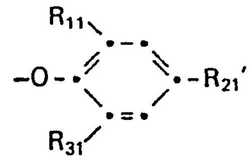

ist, worin $R_{11}$, $R_{21}'$ und $R_{31}$ unabhängig voneinander Wasserstoff, Alkyl mit je 1 bis 12 Kohlenstoffatomen oder gegebenenfalls mit Alkoxycarbonyl mit 2 bis 5 Kohlenstoffatomen substituiertes Alkoxy mit 1 bis 4 Kohlenstoffatomen sind, oder $R_{42}$ ein Rest der Formel

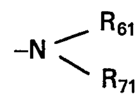

ist, worin $R_{61}$ und $R_{71}$ unabhängig voneinander Alkyl mit je 1 bis 18 Kohlenstoffatomen, Cyclopentyl, Cyclohexyl, mit Alkyl mit 1 bis 8 Kohlenstoffatomen substituiertes Phenyl oder ein Rest der Formel

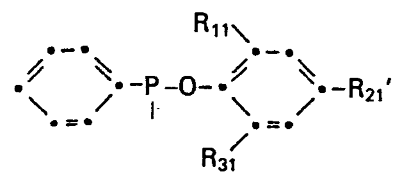

sind, worin $R_{11}$, $R_{21}'$ und $R_{31}$ die oben angegebenen Bedeutungen haben, oder $R_{61}$ und $R_{71}$ zusammen mit dem Stickstoffatom, an das sie gebunden sind, Reste der Formeln

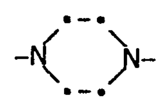 oder 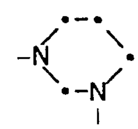

bilden, die an dem weiteren Stickstoffatom mit einem Rest der Formel

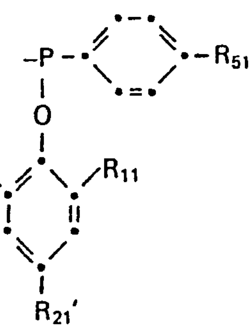

substituiert sind, worin $R_{11}$, $R_{21}'$ und $R_{31}$ die oben angegebenen Bedeutungen haben,

$R_{21}$ dieselbe Bedeutung hat wie $R_{11}$ und $R_{31}$ und zusätzlich ein Rest der Formel

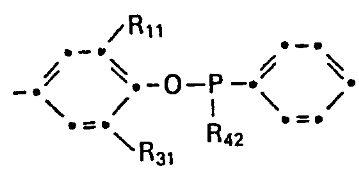

ist, worin $R_{11}$, $R_{31}$ und $R_{42}$ die oben angegebenen Bedeutungen haben, und

$R_{51}$ ein Rest der Formel

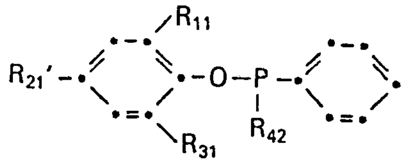

ist, worin $R_{11}$, $R_{21}'$, $R_{31}$ und $R_{42}$ die oben angegebenen Bedeutungen haben, oder $R_{51}$ Wasserstoff ist, wenn $R_{21}$ ein Rest der Formel

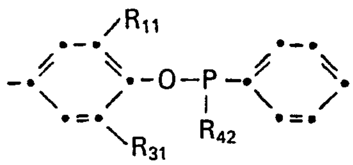

ist.

4. Photographisches Aufzeichnungsmaterial nach Anspruch 3, dadurch gekennzeichnet, dass der Entwicklungsbeschleuniger der Formel

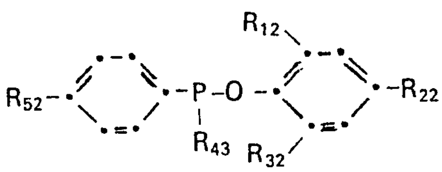 (4)

entspricht, worin

$R_{43}$ ein Rest der Formel

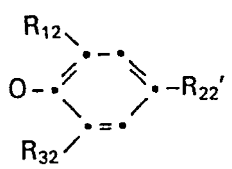

worin $R_{12}$, $R_{22}'$ oder $R_{32}$ unabhängig voneinander Wasserstoff, Alkyl mit je 1 bis 8 Kohlenstoffatomen oder gegebenenfalls mit Alkoxycarbonyl mit 2 oder 3 Kohlenstoffatomen substituiertes Alkoxy mit 1 bis 14 Kohlenstoffatomen sind, oder $R_{43}$ ein Rest der Formel

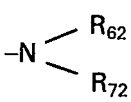

ist, worin $R_{62}$ und $R_{72}$ unabhängig voneinander Alkyl mit je 1 bis 12 Kohlenstoffatomen oder ein Rest der Formel

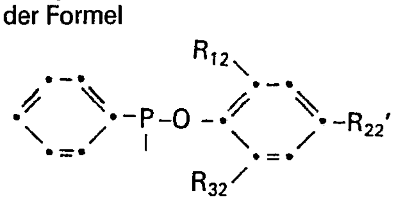

sind, worin $R_{12}$, $R_{22}'$ und $R_{32}$ die oben angegebenen Bedeutungen haben, oder $R_{62}$ und $R_{72}$ zusammen mit dem Stickstoffatom, an das sie gebunden sind, einen Rest der Formel

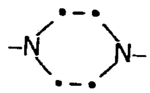

bilden, der an dem weiteren Stickstoffatom mit einem Rest der Formel

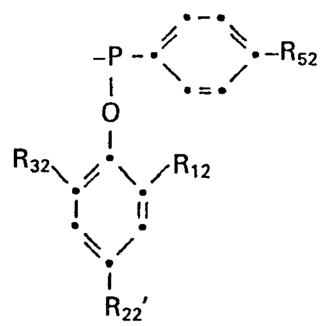

substituiert ist, worin $R_{12}$, $R_{22}'$ und $R_{32}$ die oben angegebenen Bedeutungen haben,

$R_{22}$ dieselbe Bedeutung hat wie $R_{12}$ und $R_{32}$ und zusätzlich ein Rest der Formel

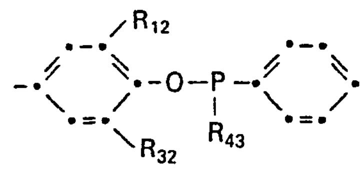

ist, worin $R_{12}$, $R_{32}$ und $R_{43}$ die oben angegebenen Bedeutungen haben, und

$R_{52}$ ein Rest der Formel

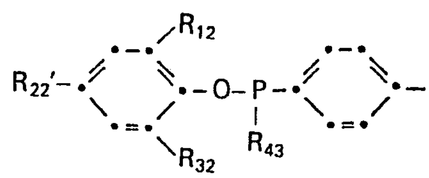

ist, worin $R_{12}$, $R_{22}'$, $R_{32}$ und $R_{43}$ die oben angegebenen Bedeutungen haben, oder $R_{52}$ Wasserstoff ist, wenn $R_{22}$ ein Rest der Formel

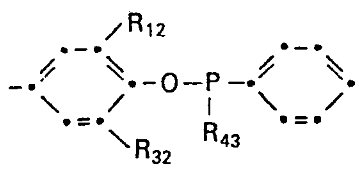

ist.

5. Photographisches Aufzeichnungsmaterial nach Anspruch 4, dadurch gekennzeichnet, dass der Entwicklungsbeschleuniger der Formel

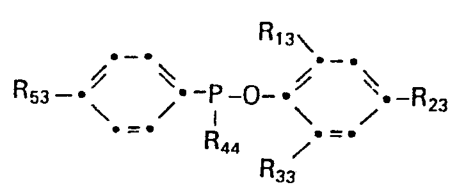 (5)

entspricht, worin

$R_{44}$ ein Rest der Formel

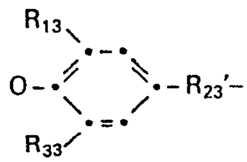

ist, worin $R_{13}$, $R_{23}'$ und $R_{33}$ unabhängig voneinander Wasserstoff, Alkyl mit je 4 bis 8 Kohlenstoffatomen oder gegebenenfalls mit Alkoxycarbonyl mit 2 oder 3 Kohlenstoffatomen substituiertes Alkoxy mit 1 bis 14 Kohlenstoffatomen sind, oder $R_{44}$ ein Rest der Formel

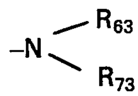

ist, worin $R_{63}$ und $R_{73}$ unabhängig voneinander Alkyl mit je 1 bis 8 Kohlenstoffatomen oder ein Rest der Formel

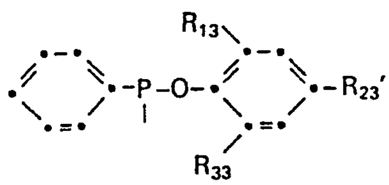

sind, worin $R_{13}$, $R_{23}'$ und $R_{33}$ die oben angegebenen Bedeutungen haben, oder $R_{63}$ und $R_{73}$ zusammen mit dem Stickstoffatom, an das sie gebunden sind, einen Rest der Formel

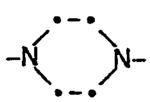

bilden, der an dem weiteren Stickstoffatom mit einem Rest der Formel

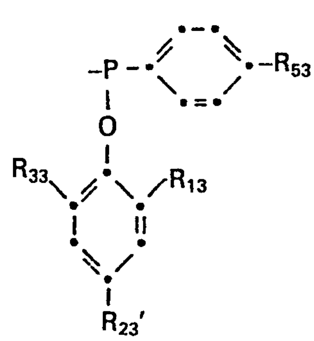

substituiert ist, worin $R_{13}$, $R_{23}'$ und $R_{33}$ die angegebenen Bedeutungen haben,

$R_{23}$ dieselbe Bedeutung hat wie $R_{13}$ und $R_{33}$ und zusätzlich ein Rest der Formel

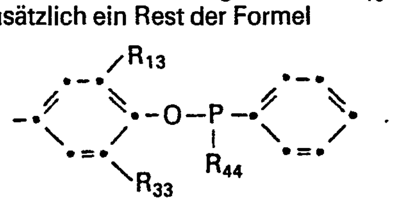

ist, worin $R_{13}$, $R_{33}$ und $R_{44}$ die oben angegebenen Bedeutungen haben, und

$R_{53}$ ein Rest der Formel

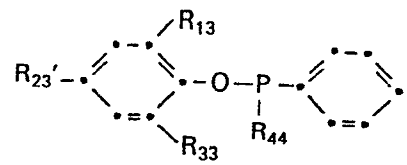

ist, worin $R_{13}$, $R_{23}'$, $R_{33}$ und $R_{44}$ die oben angegebenen Bedeutungen haben, oder $R_{53}$ Wasserstoff ist, wenn $R_{23}$ ein Rest der Formel

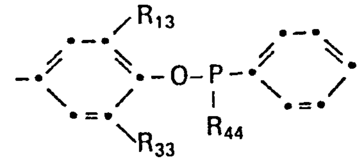

ist.

6. Photographisches Aufzeichnungsmaterial, das in mindestens einer Silberhalogenidemulsionsschicht oder in einer an diese Schicht angrenzenden Kolloidschicht mindestens einen Entwicklungsbeschleuniger enthält, dadurch gekennzeichnet, dass der Entwicklungsbeschleuniger der Formel

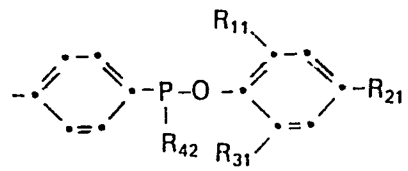 (3a)

entspricht, worin

$R_{42}$ ein Rest der Formel

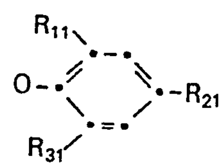

worin $R_{11}$, $R_{21}'$ und $R_{31}$ unabhängig voneinander Wasserstoff, Alkyl mit je 1 bis 12 Kohlenstoffatomen oder gegebenenfalls mit Alkoxycarbonyl mit 2 bis 5 Kohlenstoffatomen substituiertes Alkoxy mit 1 bis 4 Kohlenstoffatomen sind, oder $R_{42}$ ein Rest der Formel

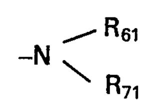

ist, worin $R_{61}$ und $R_{71}$ unabhängig voneinander Alkyl mit je 1 bis 18 Kohlenstoffatomen, Cyclopentyl, Cyclohexyl, mit Alkyl mit 1 bis 8 Kohlenstoffatomen substituiertes Phenyl oder ein Rest der Formel

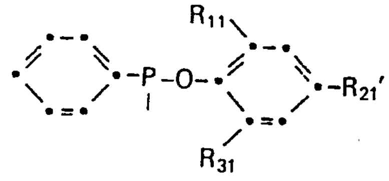

sind, worin $R_{11}$, $R_{21}'$ und $R_{31}$ die oben angegebenen Bedeutungen haben, oder $R_{61}$ und $R_{71}$ zusammen mit dem Stickstoffatom, an das sie gebunden sind, Reste der Formeln

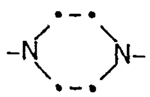

oder

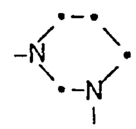

bilden, die an dem weiteren Stickstoffatom mit einem Rest der Formel

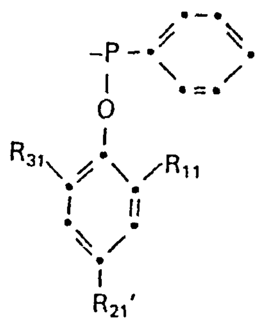

substituiert sind, worin $R_{11}$, $R_{21}'$ und $R_{31}$ die oben angegebenen Bedeutungen haben,

$R_{21}$ dieselbe Bedeutung hat wie $R_{11}$ und $R_{31}$ und zusätzlich ein Rest der Formel

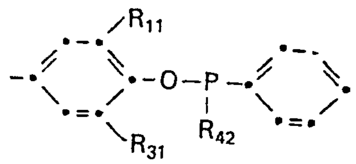

ist, worin $R_{11}$, $R_{31}$ und $R_{42}$ die oben angegebenen Bedeutungen haben.

7. Photographisches Aufzeichnungsmaterial nach Anspruch 6, dadurch gekennzeichnet, dass der Entwicklungsbeschleuniger der Formel

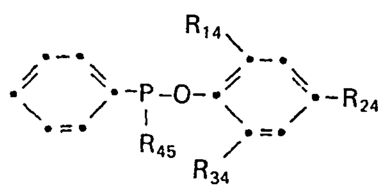

(6)

entspricht, worin

$R_{45}$ ein Rest der Formel

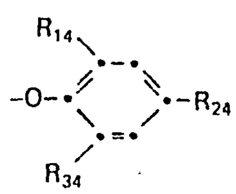

worin $R_{14}$ und $R_{34}$ unabhängig voneinander Wasserstoff oder Alkyl mit je 4 bis 8 Kohlenstoffatomen sind, und $R_{24}$ Wasserstoff, Alkyl mit je 4 bis 8 Kohlenstoffatomen oder gegebenenfalls mit Alkoxycarbonyl mit 2 oder 3 Kohlenstoffatomen substituiertes Alkoxy mit 1 bis 14 Kohlenstoffatomen ist, oder $R_{45}$ ein Rest der Formel

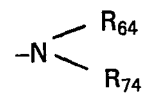

ist, worin $R_{64}$ und $R_{74}$ unabhängig voneinander Alkyl mit je 1 bis 8 Kohlenstoffatomen oder ein Rest der Formel

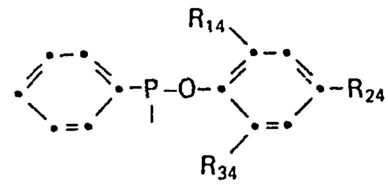

sind, worin $R_{14}$, $R_{24}$ und $R_{34}$ die oben angegebenen Bedeutungen haben, oder $R_{63}$ und $R_{73}$ zusammen mit dem Stickstoffatom, an das sie gebunden sind, einen Rest der Formel

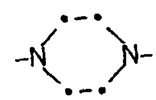

bilden, der an dem weiteren Stickstoffatom mit einem Rest der Formel

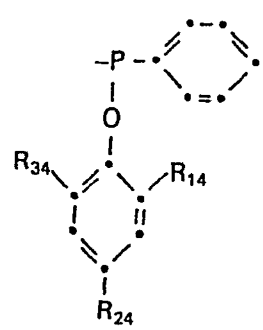

substituiert ist, worin $R_{14}$, $R_{24}$ und $R_{34}$ die oben angegebenen Bedeutungen haben.

8. Photographisches Aufzeichnungsmaterial, das in mindestens einer Silberhalogenidemulsionsschicht oder in einer an diese Schicht angrenzenden Kolloidschicht mindestens einen Entwicklungsbeschleuniger enthält, dadurch gekennzeichnet, dass der Entwicklungsbeschleuniger wiederkehrende Einheiten der Formel

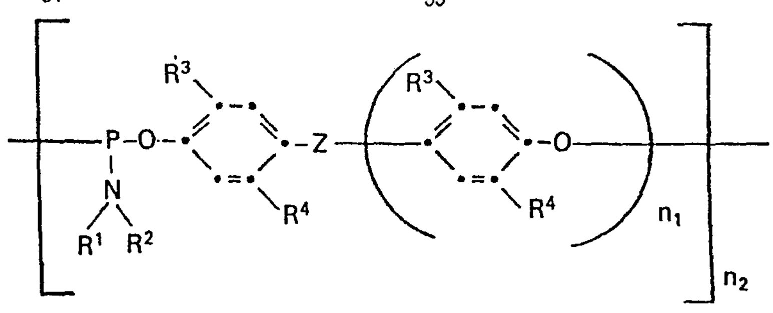

(7)

enthält, worin

$R^1$ und $R^2$ unabhängig voneinander Alkyl mit je 1 bis 12 Kohlenstoffatomen oder gegebenenfalls mit Alkyl mit 4 bis 8 Kohlenstoffatomen substituiertes Phenyl und

$R^3$ und $R^4$ unabhängig voneinander Wasserstoff oder Alkyl mit je 1 bis 8 Kohlenstoffatomen sind,

Z Sauerstoff oder Schwefel,

$n_1$ 0, 1 oder 2, und

$n_2$ eine ganze Zahl von 1 bis 100 ist.

9. Photographisches Aufzeichnungsmaterial, das in mindestens einer Silberhalogenidemulsionsschicht oder in einer an diese Schicht angrenzenden Kolloidschicht mindestens einen Entwicklungsbeschleuniger enthält, dadurch gekennzeichnet, dass der Entwicklungsbeschleuniger der Formel

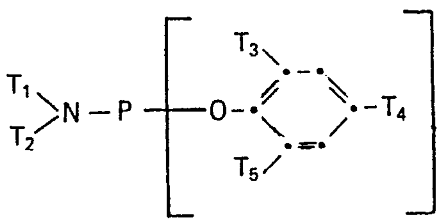 (8)

entspricht, worin

$T_1$ Alkyl mit 1 bis 12 Kohlenstoffatomen und

$T_2$ ein Rest der Formel

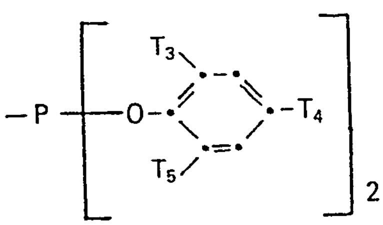

ist, oder

$T_1$ und $T_2$ gegebenenfalls substituiertes Alkylen mit 4 bis 12 Kohlenstoffatomen sind oder zusammen mit dem Stickstoffatom, an das sie gebunden sind, Reste der Formeln

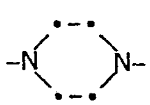 oder 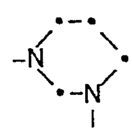

bilden, die an dem weiteren Stickstoffatom mit einem Rest der Formel

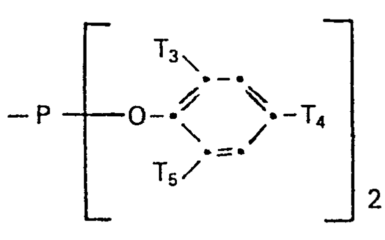

substituiert sind, und

$T_3$, $T_4$ und $T_5$ unabhängig voneinander Wasserstoff oder Alkyl mit je 1 bis 12 Kohlenstoffatomen sind.

10. Photographisches Aufzeichnungsmaterial nach Anspruch 9, dadurch gekennzeichnet, dass der Entwicklungsbeschleuniger der Formel

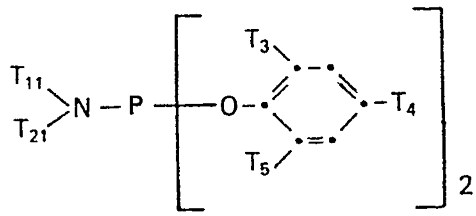 (9)

entspricht,

worin $T_{11}$ Alkyl mit 1 bis 6 Kohlenstoffatomen,

$T_{21}$ ein Rest der Formel

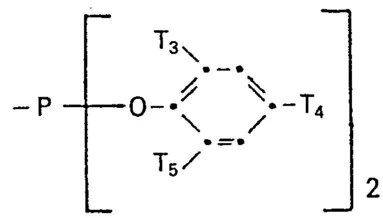

ist, oder

$T_{11}$ und $T_{21}$ eine Gruppe der Formel $-C(CH_3)_2CH_2CH_2CH_2C(CH_3)_2-$ sind, oder zusammen mit dem Stickstoffatom, an das sie gebunden sind, einen Rest der Formel

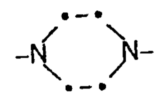

bilden, der an dem weiteren Stickstoffatom mit einem Rest der Formel

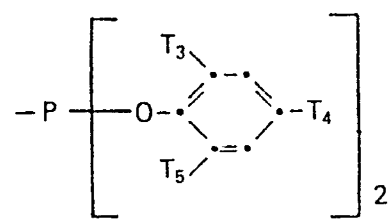

substituiert ist, und

$T_3$, $T_4$ und $T_5$ die in Anspruch 9 angegebenen Bedeutungen haben.

11. Photographisches Aufzeichnungsmaterial nach Anspruch 10, dadurch gekennzeichnet, dass der Entwicklungsbeschleuniger der Formel

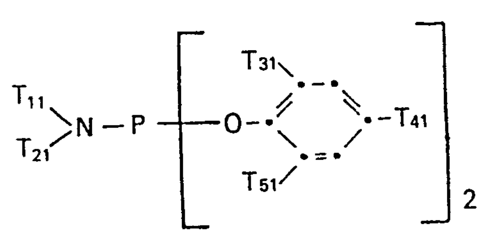 (10)

entspricht, worin

$T_{31}$, $T_{41}$ und $T_{51}$ jeweils Wasserstoff oder Alkyl mit je 4 bis 8 Kohlenstoffatomen sind, und $T_{11}$

und $T_{21}$ die in Anspruch 10 angegebenen Bedeutungen haben.

12. Verbindungen der Formel

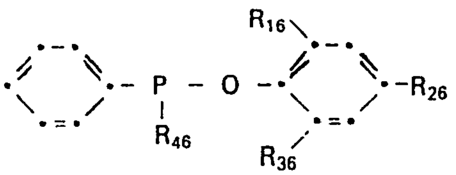

(11)

worin

$R_{16}$, $R_{26}$ und $R_{36}$ unabhängig voneinander Alkyl mit je 1 bis 16 Kohlenstoffatomen oder gegebenenfalls substituiertes Alkoxy mit je 1 bis 18 Kohlenstoffatomen sind und $R_{26}$ zusätzlich ein Rest der Formel

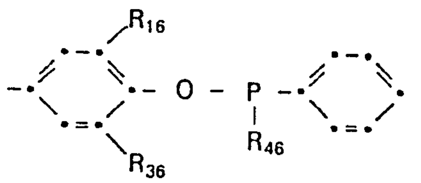

ist, worin $R_{16}$ und $R_{36}$ die angegebenen Bedeutungen haben, und

$R_{46}$ gegebenenfalls substituiertes Phenoxy oder gegebenenfalls substituiertes Amino ist, wobei mindestens einer der Substituenten am Phenoxyrest $R_{46}$ von Methyl, i-Propyl und t-Butyl verschieden ist.

13. Verbindungen nach Anspruch 12, dadurch gekennzeichnet, dass $R_{16}$, $R_{26}$ und $R_{36}$ unabhängig voneinander Alkyl mit 4 bis 8 Kohlenstoffatomen oder gegebenenfalls Alkoxycarbonyl mit 2 oder 3 Kohlenstoffatomen substituiertes Alkoxy mit 4 bis 8 Kohlenstoffatomen sind, und $R_{26}$ zusätzlich ein Rest der Formel

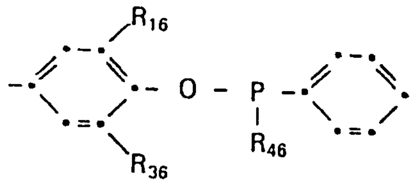

ist, worin $R_{16}$ und $R_{36}$ die oben angegebenen Bedeutungen haben, und $R_{46}$ in 2-, 4- und 6-Stellung mit Alkylresten mit je 4 bis 8 Kohlenstoffatomen substituiertes Phenoxy oder ein Rest der Formel

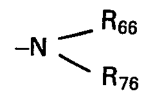

ist, worin $R_{66}$ Alkyl mit 1 bis 8 Kohlenstoffatomen und $R_{76}$ ein Rest der Formel

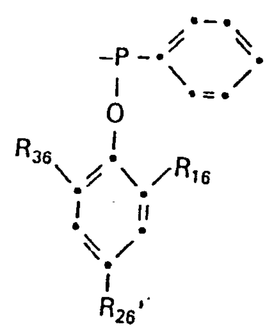

ist, worin $R_{16}$ und $R_{36}$ die oben angegebenen Bedeutungen haben und $R_{26}'$ dieselbe Bedeutung hat wie $R_{16}$ und $R_{36}$, wobei mindestens einer der Substituenten am Phenoxyrest $R_{46}$ von t-Butyl verschieden ist.

14. Verbindungen der Formel

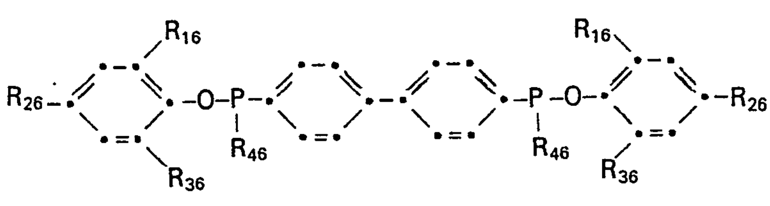

(12)

worin

$R_{16}$, $R_{26}$ und $R_{36}$ unabhängig voneinander Alkyl mit je 1 bis 16 Kohlenstoffatomen oder gegebenenfalls substituiertes Alkoxy mit je 1 bis 18 Kohlenstoffatomen sind

$R_{46}$ gegebenenfalls substituiertes Phenoxy oder gegebenenfalls substituiertes Amino ist.

15. Verbindungen nach Anspruch 14, dadurch gekennzeichnet, dass $R_{16}$, $R_{26}$ und $R_{36}$ unabhängig voneinander Alkyl mit 4 bis 8 Kohlenstoffatomen oder gegebenenfalls mit Alkoxycarbonyl mit 2 oder 3 Kohlenstoffatomen substituiertes Alkoxy mit 4 bis 8 Kohlenstoffatomen sind, und $R_{46}$ in 2-, 4- und 6-Stellung mit Alkylresten mit je 4 bis 8 Kohlenstoffatomen substituiertes Phenoxy oder ein Rest der Formel

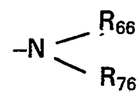

ist, worin $R_{66}$ Alkyl mit 1 bis 8 Kohlenstoffatomen und $R_{76}$ ein Rest der Formel

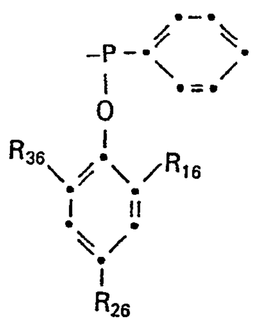

ist, worin $R_{16}$, $R_{26}$ und $R_{36}$ die oben angegebenen Bedeutungen haben.

16. Verbindungen, die wiederkehrende Einheiten der Formel

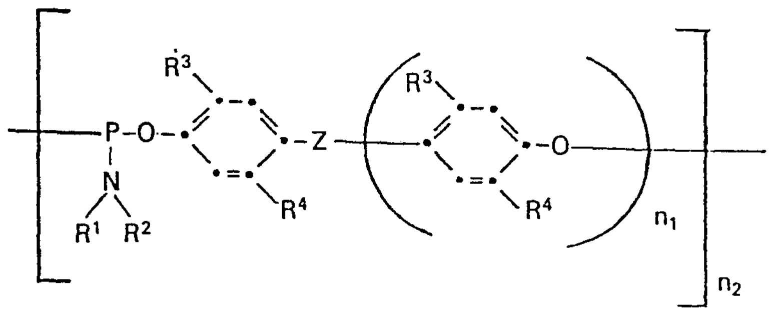
(13)

enthalten,

worin $R^1$, $R^2$, $R^3$, $R^4$, Z, $n_1$ und $n_2$ die in Anspruch 8 angegebenen Bedeutungen haben.

17. Verbindungen der Formel

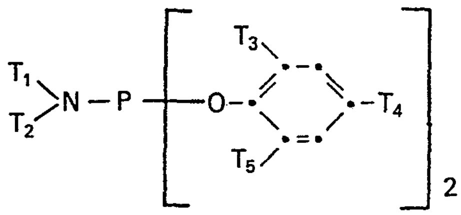
(14)

worin $T_1$, $T_2$, $T_3$, $T_4$ und $T_5$ die in Anspruch 9 angegebenen Bedeutungen haben.

18. Verwendung der photographischen Aufzeichnungsmaterialien nach einem der Ansprüche 1 bis 11 zur Herstellung von photographischen Bildern.

19. Entwicklungsbad für photographisches Aufzeichnungsmaterial, dadurch gekennzeichnet, dass es einen Entwicklungsbeschleuniger gemäss einer der Formeln (1) bis (10) und (3a) in einer Menge von 0,5 bis 10 g pro Liter Lösung enthält.

20. Verfahren zur Herstellung photographischer Aufzeichnungsmaterialien nach einem der Ansprüche 1 bis 10, dadurch gekennzeichnet, dass ein in diesen Ansprüchen definierter Entwicklungsbeschleuniger in eine Schicht des photographischen Aufzeichnungsmaterials eingearbeitet wird.

## Revendications

1. Matériau d'enregistrement photographique qui contient dans au moins une couche d'émulsion d'halogénure d'argent ou dans une couche de colloïde voisine de cette couche au moins un accélérateur de développement, caractérisé par le fait que l'accélérateur de développement correspond à la formule

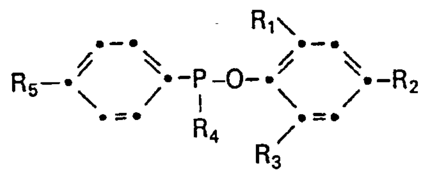
(1)

dans laquelle

$R_1$, $R_2$ et $R_3$ sont, indépendamment les uns des autres, des atomes d'hydrogène, des groupes alkyle ayant chacun de 1 à 16 atomes de carbone ou des groupes alcoxy éventuellement substitués contenant chacun de 1 à 18 atomes de carbone, et $R_2$ représente en outre un résidu de formule

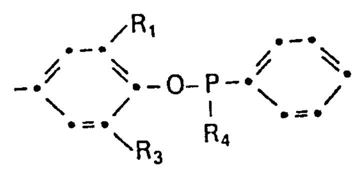

dans laquelle $R_1$ et $R_3$ ont la signification donnée ci-dessus;

$R_4$ est un groupe phénoxy éventuellement substitué ou un groupe amino éventuellement substitué; et

$R_5$ est un résidu de formule

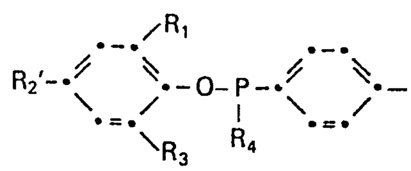

dans laquelle $R_1$, $R_3$ et $R_4$ ont les significations données, et $R_2'$ a les mêmes significations que $R_1$ et $R_3$, ou bien $R_5$ est un atome d'hydrogène lorsque $R_2$ est un résidu de formule

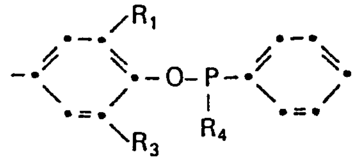

2. Matériau d'enregistrement photographique selon la revendication 1, caractérisé par le fait que l'accélérateur de développement correspond à la formule

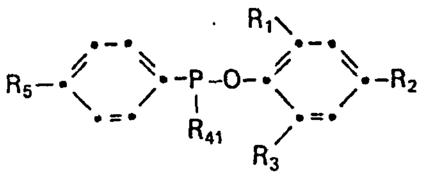
(2)

dans laquelle

$R_{41}$ est un résidu de formule

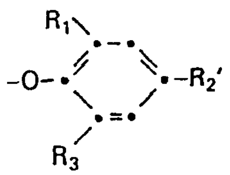

dans laquelle

$R_1$, $R_2'$ et $R_3$ ont les significations données dans la revendication 1,

ou bien un résidu de formule

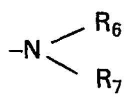

dans laquelle $R_6$ et $R_7$ sont, indépendamment l'un de l'autre, des groupes alkyle ayant chacun de 1 à 24 atomes de carbone, des groupes cyclopentyle, cyclohexyle, phényle éventuellement substitué, ou un reste de formule

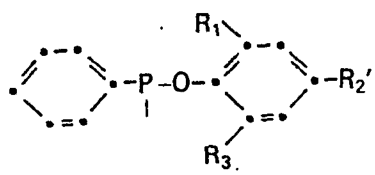

dans laquelle $R_1$, $R_2'$ et $R_3$ ont les significations données dans la revendication 1, ou bien $R_6$ et $R_7$ forment, conjointement avec l'atome d'azote auquel ils sont reliés, des radicaux de formules

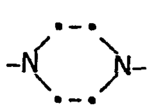
oder
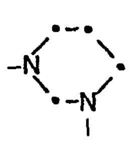

qui sont substitués au niveau de l'autre atome d'azote avec un groupement de formule

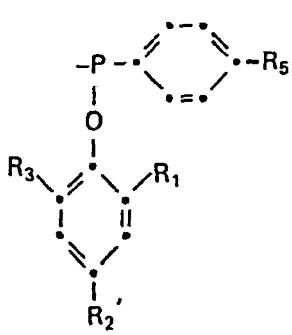

dans laquelle $R_1$, $R_2'$, $R_3$ et $R_5$ ont les significations données plus haut.

3. Matériau d'enregistrement photographique selon la revendication 2, caractérisé par le fait que l'accélérateur de développement correspond à la formule

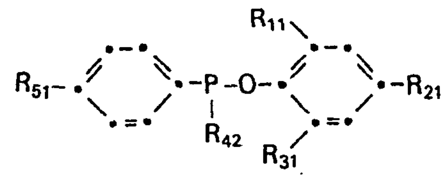
(3)

dans laquelle

$R_{42}$ est un résidu de formule

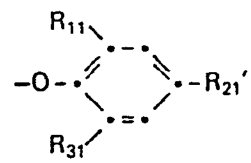

dans laquelle $R_{11}$, $R_{21}'$ et $R_{31}$ sont, indépendamment les uns des autres, des atomes d'hydrogène, des groupes alkyle ayant chacun de 1 à 12 atomes de carbone, ou des groupes alcoxy ayant de 1 à 14 atomes de carbone éventuellement substitués avec des radicaux alcoxycarbonyle contenant de 2 à 5 atomes de carbone,

ou bien $R_{42}$ est un résidu de formule

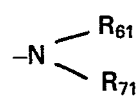

dans laquelle $R_{61}$ et $R_{71}$ sont, indépendamment l'un de l'autre, des groupes alkyle ayant chacun de 1 à 18 atomes de carbone, des groupes cyclopentyle, cyclohexyle, phényle substitué avec un radical alkyle ayant de 1 à 8 atomes de carbone, ou un reste de formule

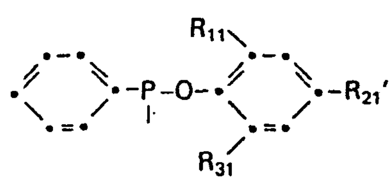

dans laquelle $R_{11}$, $R_{21}'$ et $R_{31}$ ont les significations données plus haut, ou bien $R_{61}$ et $R_{71}$ forment, conjointement avec l'atome d'azote auquel ils sont reliés, des radicaux de formules

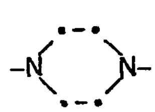
ou
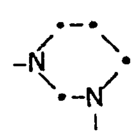

qui sont substitués au niveau de l'autre atome d'azote avec un groupement de formule

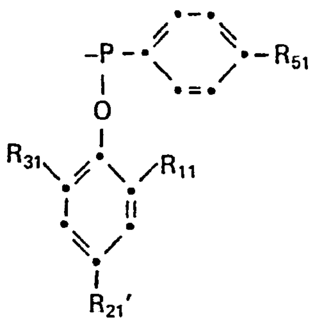

dans laquelle $R_{11}$, $R_{21}'$ et $R_{31}$ ont les significations données plus haut;

$R_{21}$ a la même signification que $R_{11}$ et $R_{31}$ et il est en plus un résidu de formule

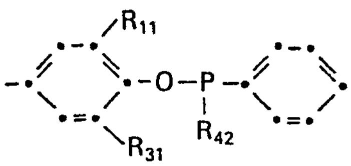

dans laquelle $R_{11}$, $R_{31}$ et $R_{42}$ ont les significations données plus haut; et

$R_{51}$ est un résidu de formule

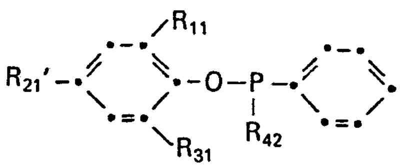

dans laquelle $R_{11}$, $R_{21}'$, $R_{31}$ et $R_{42}$ ont les significations données plus haut,

ou $R_{51}$ est un atome d'hydrogène lorsque $R_{21}$ est un résidu de formule

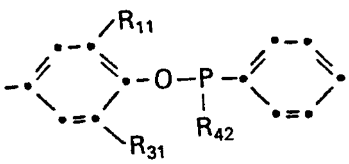

4. Matériau d'enregistrement photographique selon la revendication 3, caractérisé par le fait que l'accélérateur de développement correspond à la formule

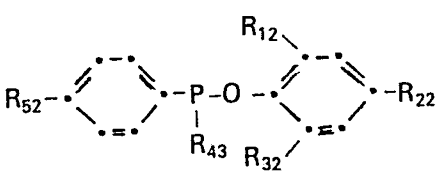

(4)

dans laquelle

$R_{43}$ est un résidu de formule

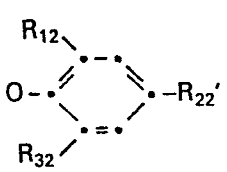

dans laquelle $R_{12}$, $R_{22}'$ ou $R_{32}$ sont, indépendamment les uns des autres, des atomes d'hydrogène, des groupes alkyle ayant chacun de 1 à 8 atomes de carbone, ou des groupes alcoxy ayant de 1 à 14 atomes de carbone éventuellement substitués avec des radicaux alcoxycarbonyle contenant 2 ou 3 atomes de carbone,

ou bien $R_{43}$ est un résidu de formule

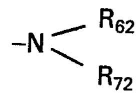

dans laquelle $R_{62}$ et $R_{72}$ sont chacun, indépendamment l'un de l'autre, un groupe alkyle ayant de 1 à 12 atomes de carbone ou un radical de formule

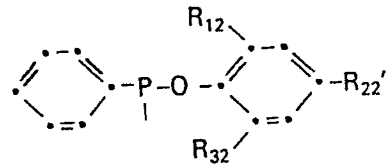

dans laquelle $R_{12}$, $R_{22}'$ et $R_{32}$ ont les significations données plus haut, ou bien $R_{62}$ et $R_{72}$ forment, conjointement avec l'atome d'azote auquel ils sont reliés, un radical de formule

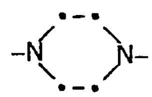

qui est substitué au niveau de l'autre atome d'azote avec un groupement de formule

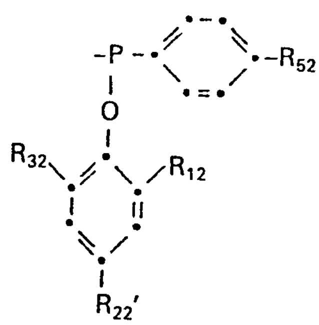

dans laquelle $R_{12}$, $R_{22}'$ et $R_{32}$ ont les significations données plus haut;

$R_{22}$ a la même signification que $R_{12}$ et $R_{32}$ et il est en plus un résidu de formule

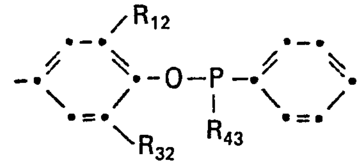

dans laquelle $R_{12}$, $R_{32}$ et $R_{43}$ ont les significations données plus haut; et

$R_{52}$ est un résidu de formule

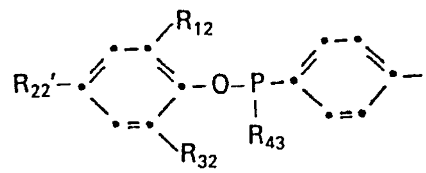

dans laquelle $R_{12}$, $R_{22}'$, $R_{32}$ et $R_{43}$ ont les significations données plus haut, ou $R_{52}$ est un atome d'hydrogène lorsque $R_{22}$ est un radical de formule

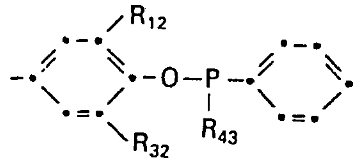

5. Matériau d'enregistrement photographique selon la revendication 4, caractérisé par le fait que l'accélérateur de développement correspond à la formule

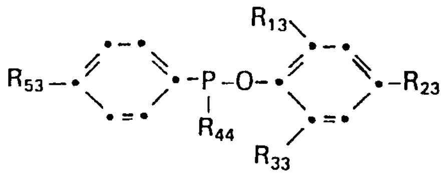
(5)

dans laquelle

$R_{44}$ est un résidu de formule

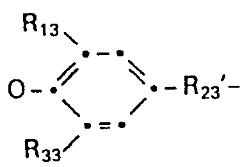

dans laquelle $R_{13}$, $R_{23}'$ et $R_{33}$ sont, indépendamment les unsd es autres, des atomes d'hydrogène, des groupes alkyle ayant chacun de 4 à 8 atomes de carbone, ou des groupes alcoxy ayant de 1 à 14 atomes de carbone éventuellement substitués avec des radicaux alcoxycarbonyle contenant 2 ou 3 atomes de carbone,

ou bien $R_{44}$ est un résidu de formule

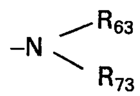

dans laquelle $R_{63}$ et $R_{73}$ sont, indépendamment l'un de l'autre, des groupes alkyle ayant chacun de 1 à 8 atomes de carbone, ou un reste de formule

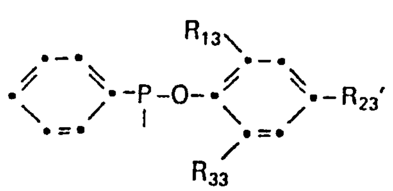

dans laquelle $R_{13}$, $R_{23}'$ et $R_{33}$ ont les significations données plus haut, ou bien $R_{63}$ et $R_{73}$ forment, conjointement avec l'atome d'azote auquel ils sont reliés, un radical de formule

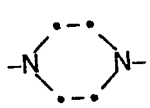

qui est substitué au niveau de l'autre atome d'azote avec un groupement de formule

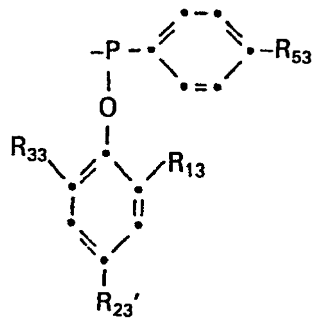

dans laquelle $R_{13}$, $R_{23}'$ et $R_{33}$ ont les significations données; $R_{23}$ a la même signification que $R_{13}$ et $R_{33}$ et il est en plus un résidu de formule

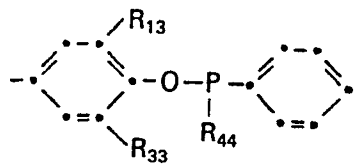

dans laquelle $R_{13}$, $R_{33}$ et $R_{44}$ ont les significations données plus haut; et

$R_{53}$ est un résidu de formule

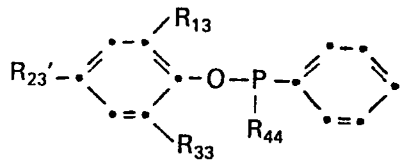

dans laquelle $R_{13}$, $R_{23}'$, $R_{33}$ et $R_{43}$ ont les significations données plus haut, ou $R_{53}$ est un atome d'hydrogène lorsque $R_{23}$ est un résidu de formule

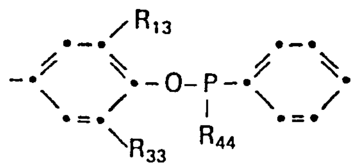

6. Matériau d'enregistrement photographique qui contient dans au moins une couche d'émulsion d'halogénure d'argent ou dans une couche de colloïde voisine de cette couche au moins un accélérateur de développement, caractérisé par le fait que l'accélérateur de développement correspond à la formule

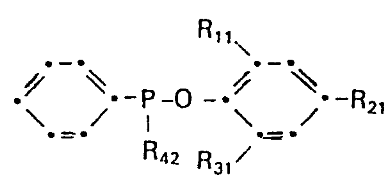
(3a)

dans laquelle $R_{42}$ est un résidu de formule

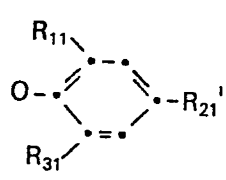

dans laquelle $R_{11}$, $R_{21}'$ et $R_{31}$ sont, indépendamment les uns des autres, des atomes d'hydrogène, des groupes alkyle ayant chacun de 1 à 12 atomes de carbone ou des groupes alcoxy ayant de 1 à 14 atomes de carbone éventuellement substitués avec des radicaux alcoxycarbonyle contenant de 2 à 5 atomes de carbone,

ou bien $R_{42}$ est un résidu de formule

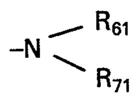

dans laquelle $R_{61}$ et $R_{71}$ sont, indépendamment l'un de l'autre, des groupes alkyle ayant chacun de 1 à 18 atomes de carbone, des groupes cyclopentyle, cyclohexyle, phényle substitué avec des radicaux alkyle contenant de 1 à 8 atomes de carbone, ou un reste de formule

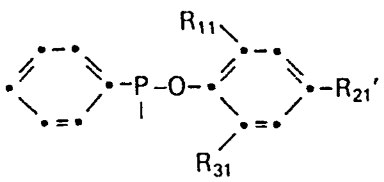

dans laquelle $R_{11}$, $R_{21}'$ et $R_{31}$ ont les significations données plus haut, ou bien $R_{61}$ et $R_{71}$ forment, conjointement avec l'atome d'azote auquel ils sont reliés, des radicaux de formules

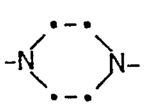

ou

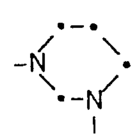

qui sont substitués au niveau de l'autre atome d'azote avec un groupement de formule

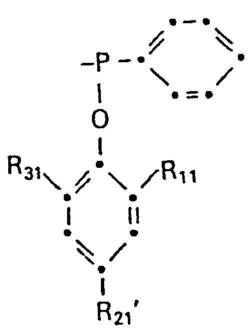

dans laquelle $R_{11}$, $R_{21}'$ et $R_{31}$ ont les significations données plus haut;

$R_{21}$ a la même signification que $R_{11}$ et $R_{31}$ et il est en plus un résidu de formule

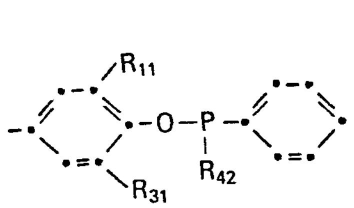

dans laquelle $R_{11}$, $R_{31}$ et $R_{42}$ ont les significations données plus haut.

7. Matériau d'enregistrement photographique selon la revendication 6, caractérisé par le fait que l'accélérateur de développement correspond à la formule

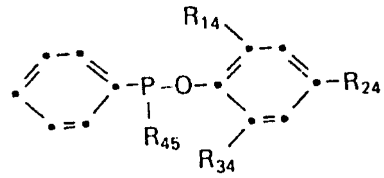

(6)

dans laquelle

$R_{45}$ est un résidu de formule

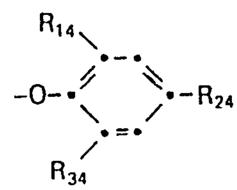

dans laquelle $R_{14}$ et $R_{34}$ sont, indépendamment l'un de l'autre, des atomes d'hydrogène ou des groupes alkyle ayant chacun de 4 à 8 atomes de carbone, et $R_{24}$ est un atome d'hydrogène, un groupe alkyle ayant de 4 à 8 atomes de carbone, ou un groupe alcoxy ayant de 1 à 14 atomes de carbone éventuellement substitué avec un radical alcoxycarbonyle contenant 2 ou 3 atomes de carbone,

ou bien $R_{45}$ est un résidu de formule

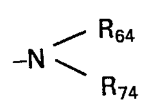

dans laquelle $R_{64}$ et $R_{74}$ sont, indépendamment l'un de l'autre, des groupes alkyle ayant chacun de 1 à 8 atomes de carbone, ou un reste de formule

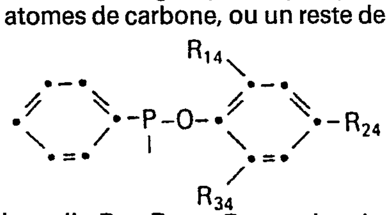

dans laquelle $R_{14}$, $R_{24}$ et $R_{34}$ ont les significations données plus haut, ou bien $R_{63}$ et $R_{73}$ forment, conjointement avec l'atome d'azote auquel ils sont reliés, un radical de formule

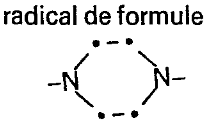

qui est substitué au niveau de l'autre atome d'azote avec un groupement de formule

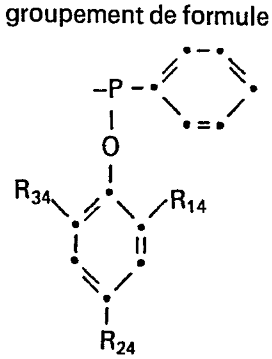

dans laquelle $R_{14}$, $R_{24}$ et $R_{34}$ ont les significations données plus haut.

8. Matériau d'enregistrement photographique qui contient dans au moins une couche d'émulsion d'halogénure d'argent ou dans une couche de colloïde voisine de cette couche au moins un accélérateur de développement, caractérisé par le fait que l'accélérateur de développement contient des unités répétitives de formule

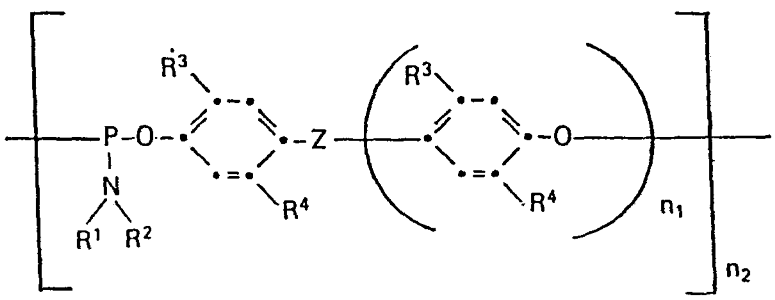
(7)

dans laquelle $R^1$ et $R^2$ sont, indépendamment l'un de l'autre, des groupes alkyle ayant chacun de 1 à 12 atomes de carbone, ou phényle éventuellement substitué par un radical alkyle ayant de 4 à 8 atomes de carbone, et

$R^3$ et $R^4$ sont, indépendamment l'un de l'autre, des atomes d'hydrogène ou des groupes alkyle ayant chacun de 1 à 8 atomes de carbone;

Z est un atome d'oxygène ou de soufre;

$n_1$ est 0, 1 ou 2; et

$n_2$ est un nombre entier allant de 1 à 100.

9. Matériau d'enregistrement photographique qui contient dans au moins une couche d'émulsion d'halogénure d'argent ou dans une couche de colloïde voisine de cette couche au moins un accélérateur de développement, caractérisé par le fait que l'accélérateur de développement correspond à la formule

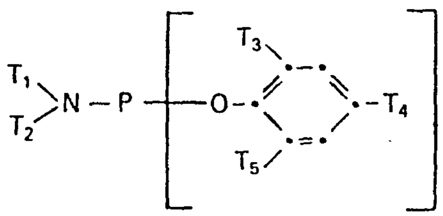
(8)

dans laquelle

$T_1$ est un groupe alkyle ayant de 1 à 12 atomes de carbone, et

$T_2$ est un résidu de formule

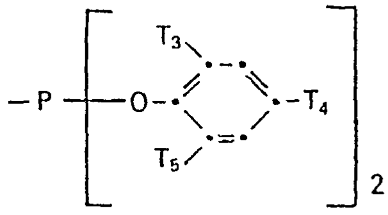

ou

$T_1$ et $T_2$ sont des groupes alkylène éventuellement substitués ayant de 4 à 12 atomes de carbone, ou bien forment, conjointement avec l'atome d'azote auquel ils sont reliés, des radicaux de formules

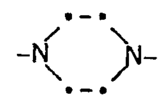
ou
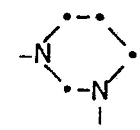

qui sont substitués au niveau de l'autre atome d'azote avec un groupement de formule

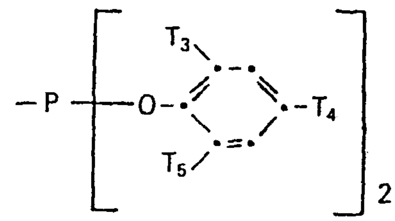

et

$T_3$, $T_4$ et $T_5$ sont, indépendamment les uns des autres, des atomes d'hydrogène ou des groupes alkyle ayant chacun de 1 à 12 atomes de carbone.

10. Matériau d'enregistrement photographique selon la revendication 9, caractérisé par le fait que l'accélérateur de développement correspond à la formule

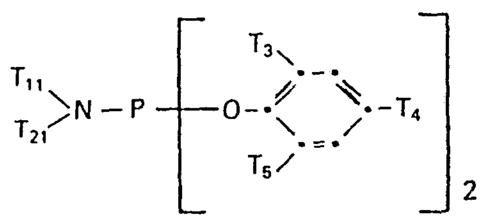
(9)

dans laquelle $T_{11}$ est un groupe alkyle ayant de 1 à 6 atomes de carbone,

$T_{21}$ est un résidu de formule

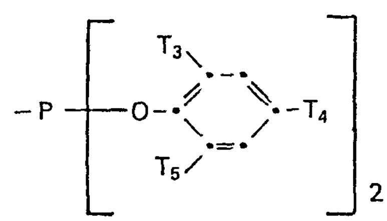

ou

$T_{11}$ et $T_{21}$ sont un groupe de formule $-CH(CH_3)_2CH_2CH_2CH_2C(CH_3)_2-$ ou bien for-

ment, conjointement avec l'atome d'azote auquel ils sont reliés, un radical de formule

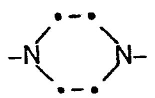

qui est substitué au niveau de l'autre atome d'azote avec un groupement de formule

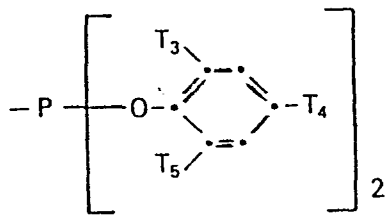

et

$T_3$, $T_4$ et $T_5$ ont les significations données dans la revendication 9.

11. Matériau d'enregistrement photographique selon la revendication 10, caractérisé par le fait que l'accélérateur de développement correspond à la formule

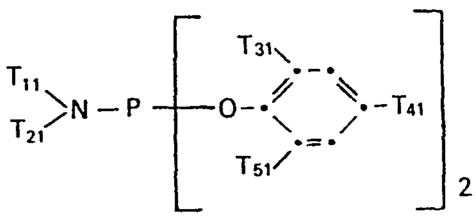

(10)

dans laquelle

$T_{31}$, $T_{41}$, et $T_{51}$ sont des atomes d'hydrogène ou des groupes alkyle ayant chacun de 4 à 8 atomes de carbone, et $T_{11}$ et $T_{21}$ ont les significations données dans la revendication 10.

12. Composés de formule

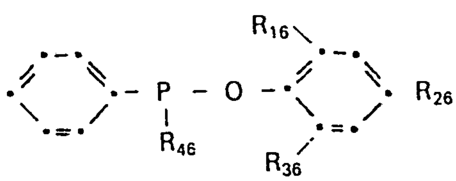

(11)

dans laquelle $R_{16}$, $R_{26}$ et $R_{36}$ sont, indépendamment les uns des autres, des groupes alkyle ayant chacun de 1 à 16 atomes de carbone ou des groupes alcoxy éventuellement substitués ayant chacun de 1 à 18 atomes de carbone, et $R_{26}$ est en plus un résidu de formule

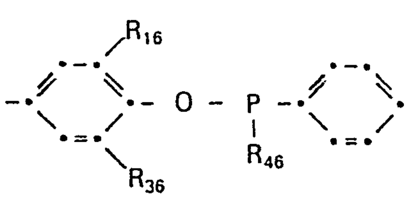

dans laquelle $R_{16}$ et $R_{36}$ ont les significations données, et $R_{46}$ est un groupe phénoxy éventuellement substitué ou un groupe amino éventuellement substitué, au moins un des substituants sur le groupe phénoxy $R_{46}$ étant différent des groupes méthyle, isopropyle et butyle tertiaire.

13. Composés selon la revendication 12, caractérisés par le fait que $R_{16}$, $R_{26}$ et $R_{36}$ sont, indépendamment les uns des autres, des groupes alkyle ayant de 4 à 8 atomes de carbone ou des groupes alcoxy ayant de 4 à 8 atomes de carbone, éventuellement substitués par des radicaux alcoxycarbonyle contenant 2 ou 3 atomes de carbone, et $R_{26}$ est en plus un résidu de formule

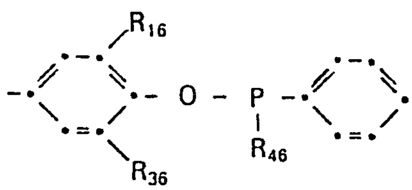

dans laquelle $R_{16}$ et $R_{36}$ ont les significations données ci-dessus; et

$R_{46}$ est un groupe phénoxy substitué en positions 2, 4 et 6 par des radicaux alkyle ayant chacun de 4 à 8 atomes de carbone, ou un résidu de formule

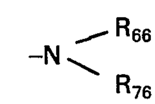

dans laquelle $R_{66}$ est un groupe alkyle ayant de 1 à 8 atomes de carbone et $R_{76}$ est un reste de formule

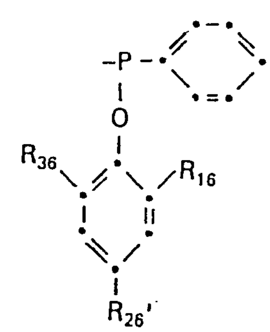

dans laquelle $R_{16}$ et $R_{36}$ ont les significations données plus haut et $R_{26}'$ a la même signification que $R_{16}$ et $R_{36}$, au moins un des substituants sur le groupe phénoxy $R_{46}$ étant différent d'un groupe butyle tertiaire.

14. Composés de formule

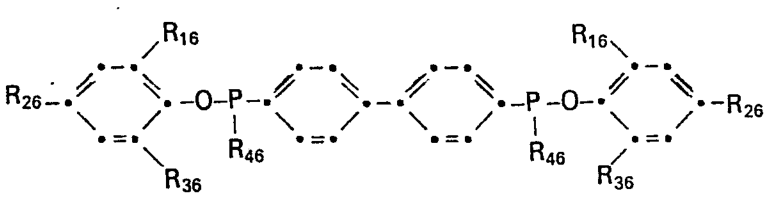

(12)

dans laquelle

$R_{16}$, $R_{26}$ et $R_{36}$ sont, indépendamment les uns des autres, des groupes alkyle ayant chacun de 1 à 16 atomes de carbone, ou des groupes alcoxy éventuellement substitués ayant chacun de 1 à 18 atomes de carbone;

$R_{46}$ est un groupe phénoxy éventuellement substitué ou un groupe amino éventuellement substitué.

15. Composés selon la revendication 14, caractérisés par le fait que $R_{16}$, $R_{26}$ et $R_{36}$ sont, indépendamment les uns des autres, des groupes alkyle ayant de 4 à 8 atomes de carbone, ou des groupes alcoxy ayant de 4 à 8 atomes de carbone éventuellement substitués avec des radicaux alcoxycarbonyle contenant 2 ou 3 atomes de carbone, et $R_{46}$ est un groupe phénoxy substitué en positions 2, 4 et 6 par des radicaux alkyle ayant chacun de 4 à 8 atomes de carbone, ou un résidu de formule

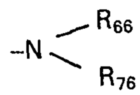

dans laquelle $R_{66}$ est un groupe alkyle ayant de 1 à 8 atomes de carbone et $R_{76}$ est un reste de formule

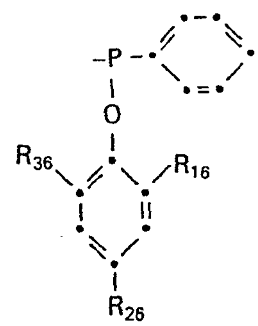

dans laquelle $R_{16}$, $R_{26}$ et $R_{36}$ ont les significations données plus haut.

16. Composés contenant les unités répétitives de formule

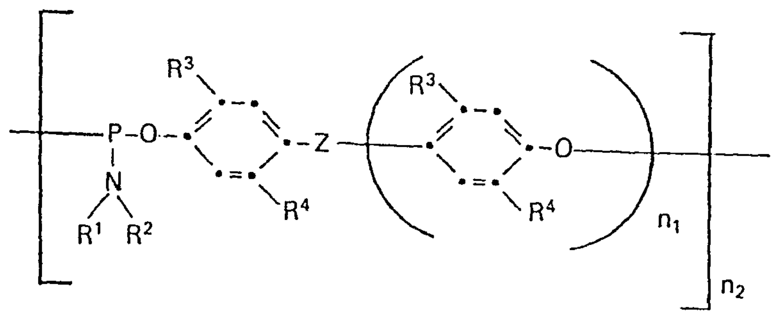

(13)

dans laquelle

$R^1$, $R^2$, $R^3$, $R^4$, Z, $n_1$ et $n_2$ ont les significations données dans la revendication 8.

17. Composés de formule

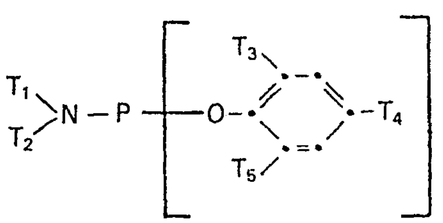

(14)

dans laquelle $T_1$, $T_2$, $T_3$, $T_4$ et $T_5$ ont les significations données dans la revendication 9.

18. Utilisation des matériaux d'enregistrement photographique selon l'une des revendications 1 à 11 pour la production d'images photographiques.

19. Bain de développement pour matériau d'enregistrement photographique, caractérisé par le fait qu'il contient un accélérateur de développement selon l'une des formules (1) à (10) et (3a) en une quantité allant de 0,5 à 10 g par litre de solution.

20. Procédé pour la préparation de matériaux d'enregistrement photographique selon l'une des revendications 1 à 10, caractérisé par le fait qu'un accélérateur de développement défini dans ces revendications est incorporé à une couche du matériau d'enregistrement photographique.

## Claims

1. A photographic recording material which contains at least one development accelerator in at least one silver halide emulsion layer or in a colloid layer adjacent to this layer, wherein the development accelerator is of the formula

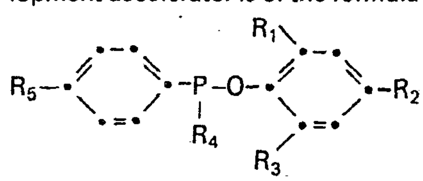

(1)

in which $R_1$, $R_2$ and $R_3$ independently of one another are hydrogen, alkyl having 1 to 16 carbon atoms each or substituted or unsubstituted alkoxy having 1 to 18 carbon atoms each, and $R_2$ is additionally a radical of the formula

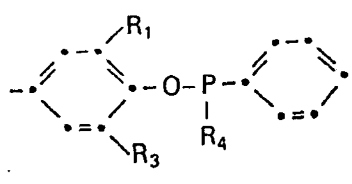

in which $R_1$ and $R_3$ are as defined above, $R_4$ is unsubstituted or substituted phenoxy or unsubstituted or substituted amino and $R_5$ is a radical of the formula

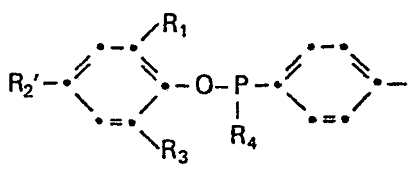

in which $R_1$, $R_3$ and $R_4$ are as defined above and $R_2'$ has the same meanings as $R_1$ and $R_3$, or $R_5$ is hydrogen when $R_2$ is a radical of the formula

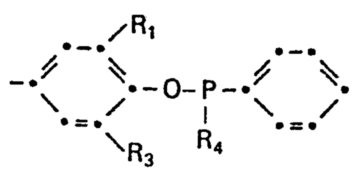

2. A photographic recording material according to claim 1, wherein the development accelerator is of the formula

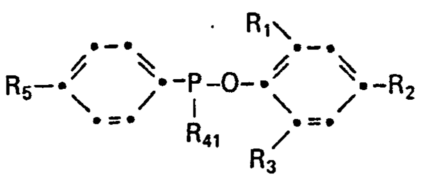 (2)

in which $R_{41}$ is a radical of the formula

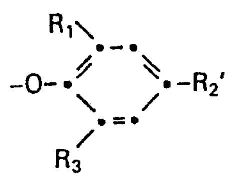

in which $R_1$, $R_2'$ and $R_3$ are as defined in claim 1, or is a radical of the formula

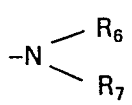

in which $R_6$ and $R_7$ independently of each other are alkyl having 1 to 24 carbon atoms each, cyclopentyl, cyclohexyl, unsubstituted or substituted phenyl or a radical of the formula

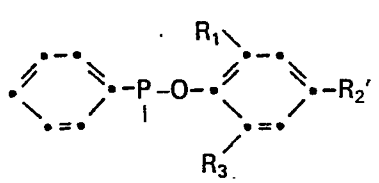

in which $R_1$, $R_2'$ and $R_3$ are as defined in claim 1, or $R_6$ and $R_7$, together with the nitrogen atom to which they are bonded, form radicals of the formulae

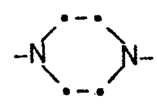 or 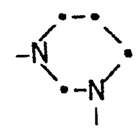

which are substituted, at the further nitrogen, atom, by a radical of the formula

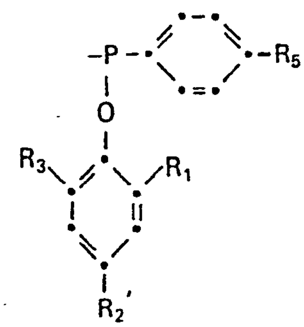

in which $R_1$, $R_2'$, $R_3$ and $R_5$ are as defined above.

3. A photographic recording material according to claim 2, wherein the development accelerator is of the formula

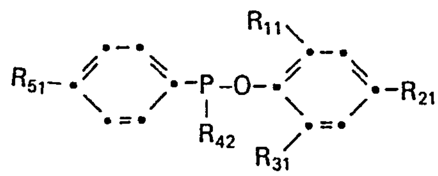 (3)

in which $R_{42}$ is a radical of the formula

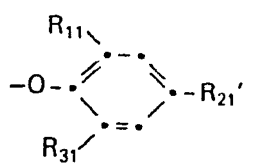

in which $R_{11}$, $R_{21}'$ and $R_{31}$ independently of one another are hydrogen, alkyl having 1 to 12 carbon atoms each, or alkoxy which has 1 to 14 carbon atoms and which is unsubstituted or substituted by alkoxycarbonyl having 2 to 5 carbon atoms, or $R_{42}$ is a radical of the formula

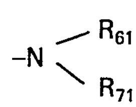

in which $R_{61}$ and $R_{71}$ independently of each other are alkyl having 1 to 18 carbon atoms each, cyclopentyl, cyclohexyl, phenyl substituted by alkyl having 1 to 8 carbon atoms, or are a radical of the formula

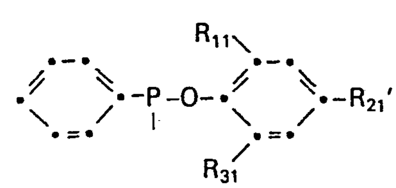

in which $R_{11}$, $R_{21}'$ and $R_{31}$ are as defined above, or $R_{61}$ and $R_{71}$, together with the nitrogen atom to

which they are bonded, form radicals of the formulae

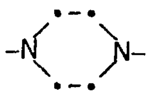

or

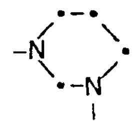

which are substituted, at the further nitrogen atom, by a radical of the formula

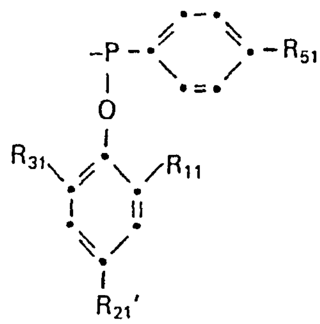

in which $R_{11}$, $R_{21}'$ and $R_{31}$ are as defined above, $R_{21}$ has the same meaning as $R_{11}$ and $R_{31}$ and is additionally a radical of the formula

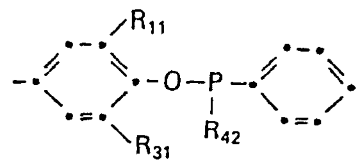

in which $R_{11}$, $R_{31}$ and $R_{42}$ are as defined above, and $R_{51}$ is a radical of the formula

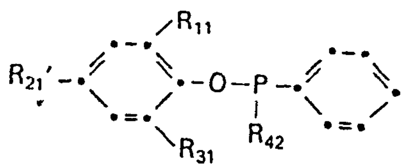

in which $R_{11}$, $R_{21}'$, $R_{31}$ and $R_{42}$ are as defined above, or $R_{51}$ is hydrogen when $R_{21}$ is a radical of the formula

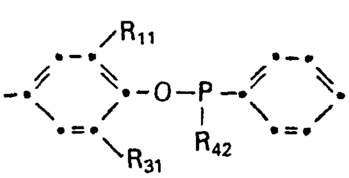

4. A photographic recording material according to claim 3, wherein the development accelerator is of the formula

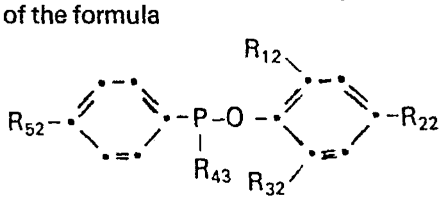

(4)

in which $R_{43}$ is a radical of the formula

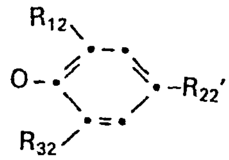

in which $R_{12}$, $R_{22}'$ and $R_{32}$ independently of one another are hydrogen, alkyl having 1 to 8 carbon atoms each or alkoxy which has 1 to 14 carbon atoms and which is unsubstituted or substituted by alkoxycarbonyl having 2 or 3 carbon atoms, or $R_{43}$ is a radical of the formula

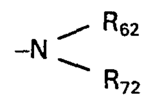

in which $R_{62}$ and $R_{72}$ independently of each other are alkyl having 1 to 12 carbon atoms each or a radical of the formula

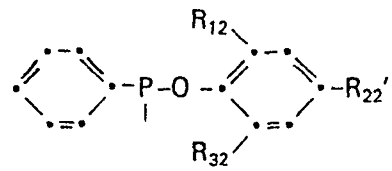

in which $R_{12}$, $R_{22}'$ and $R_{32}$ are as defined above, or $R_{62}$ and $R_{72}$, together with the nitrogen atom to which they are bonded, form a radical of the formula

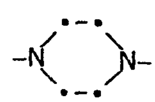

which is substituted, at the further nitrogen atom, by a radical of the formula

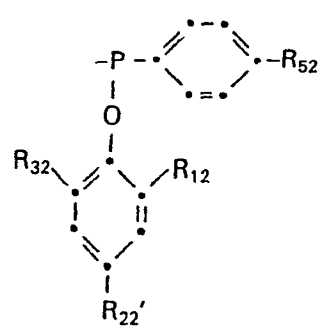

in which $R_{12}$, $R_{22}'$ and $R_{32}$ are as defined above, $R_{22}$ has the same meaning as $R_{12}$ and $R_{32}$ and is additionally a radical of the formula

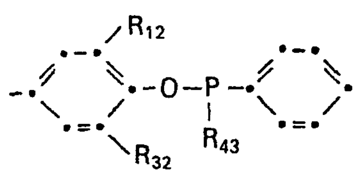

in which $R_{12}$, $R_{32}$ and $R_{43}$ are as defined above, and $R_{52}$ is a radical of the formula

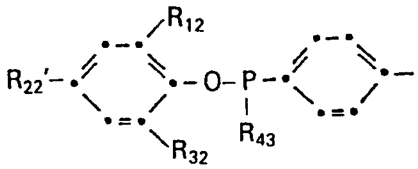

in which $R_{12}$, $R_{22}'$, $R_{32}$ and $R_{43}$ are as defined above, or $R_{52}$ is hydrogen when $R_{22}$ is a radical of the formula

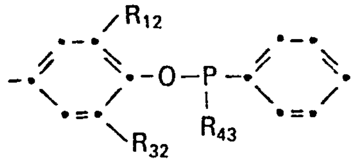

5. A photographic recording material according to claim 4, wherein the development accelerator is of the formula

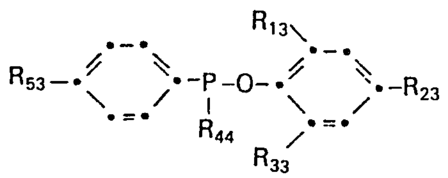

(5)

in which $R_{44}$ is a radical of the formula

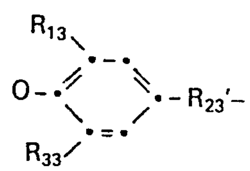

in which $R_{13}$, $R_{23}'$ and $R_{33}$ independently of one another are hydrogen, alkyl having 4 to 8 carbon atoms each or alkoxy which has 1 to 14 carbon atoms and is unsubstituted or substituted by alkoxycarbonyl having 2 or 3 carbon atoms, or $R_{44}$ is a radical of the formula

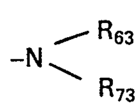

in which $R_{63}$ and $R_{73}$ independently of each other are alkyl having 1 to 8 carbon atoms each or a radical of the formula

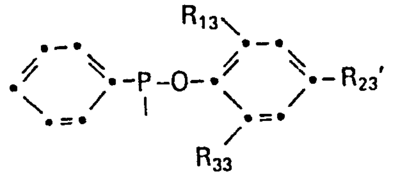

in which $R_{13}$, $R_{23}'$ and $R_{33}$ are as defined above, or $R_{63}$ and $R_{73}$, together with the nitrogen atom to which they are bonded, form a radical of the formula

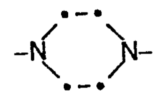

which is substituted, at the further nitrogen atom, by a radical of the formula

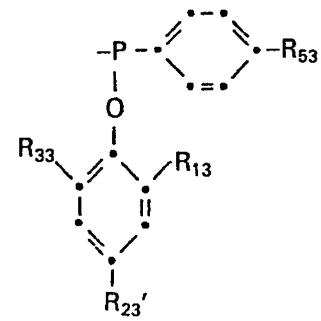

in which $R_{13}$, $R_{23}'$ and $R_{33}$ are as defined above, $R_{23}$ has the same meaning as $R_{13}$ and $R_{33}$ and is additionally a radical of the formula

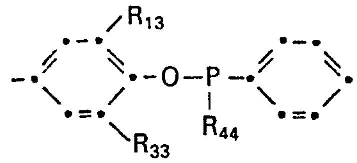

in which $R_{13}$, $R_{33}$ and $R_{44}$ are as defined above, and $R_{53}$ is a radical of the formula

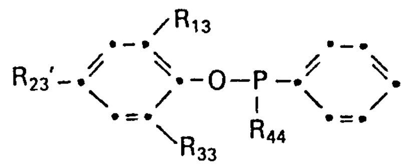

in which $R_{13}$, $R_{23}'$, $R_{33}$ and $R_{44}$ are as defined above,
or $R_{53}$ is hydrogen when $R_{23}$ is a radical of the formula

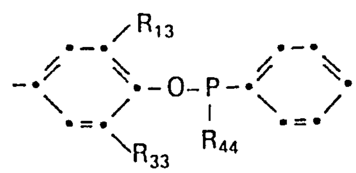

6. A photographic recording material which contains at least one development accelerator in at least one silver halide emulsion layer or in a colloid layer adjacent to this layer, wherein the development accelerator is of the formula

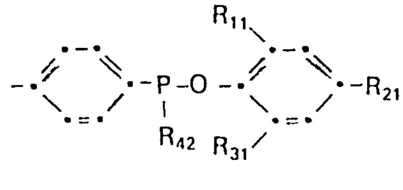

(3a)

in which $R_{42}$ is a radical of the formula

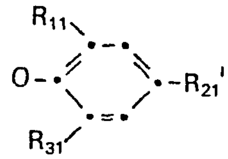

in which $R_{11}$, $R_{21}'$ and $R_{31}$ independently of one another are hydrogen, alkyl having 1 to 12 carbon atoms each or alkoxy which has 1 to 14 carbon atoms and is unsubstituted or substituted by alkoxycarbonyl having 2 to 5 carbon atoms, or $R_{42}$ is a radical of the formula

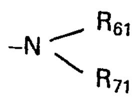

in which $R_{61}$ and $R_{71}$ independently of each other are alkyl having 1 to 18 carbon atoms each, cyclopentyl, cyclohexyl, phenyl substituted by alkyl having 1 to 8 carbon atoms, or are a radical of the formula

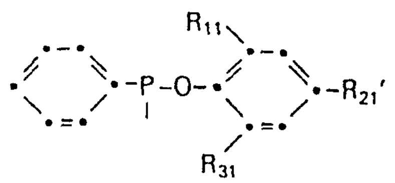

in which $R_{11}$, $R_{21}'$ and $R_{31}$ are as defined above, or $R_{61}$ and $R_{7,}$ together with the nitrogen atom to which they are bonded, form radicals of the formulae

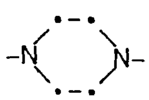

or

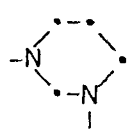

which are substituted, at the further nitrogen atom, by a radical of the formula

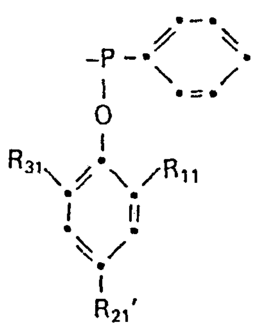

in which $R_{11}$, $R_{21}'$ and $R_{31}$ are as defined above, $R_{21}$ has the same meaning as $R_{11}$ and $R_{31}$ and is additionally a radical of the formula

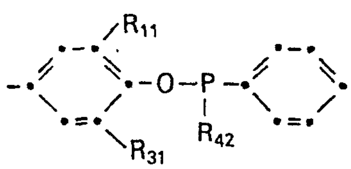

in which $R_{11}$, $R_{31}$ and $R_{42}$ are as defined above.

7. A photographic recording material according to claim 6, wherein the development accelerator is of the formula

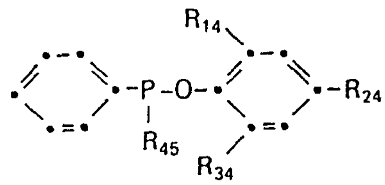

(6)

in which $R_{45}$ is a radical of the formula

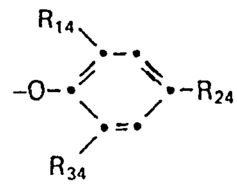

in which $R_{14}$ and $R_{34}$ independently of each other are hydrogen or alkyl having 4 to 8 carbon atoms each, and $R_{24}$ is hydrogen, alkyl having 4 to 8 carbon atoms each or alkoxy which has 1 to 14 carbon atoms and is unsubstituted or substituted by alkoxycarbonyl having 2 or 3 carbon atoms, or $R_{45}$ is a radical of the formula

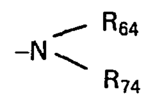

in which $R_{64}$ and $R_{74}$ independently of each other are alkyl having 1 to 8 carbon atoms each or a radical of the formula

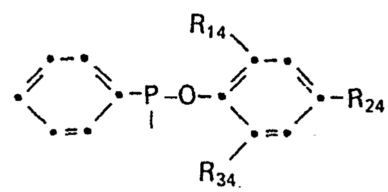

in which $R_{14}$, $R_{24}$ and $R_{34}$ are as defined above, or $R_{63}$ and $R_{73}$, together with the nitrogen atom to which they are bonded, form a radical of the formula

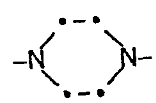

which is substituted, at the further nitrogen atom, by a radical of the formula

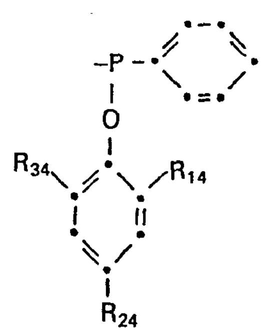

in which $R_{14}$, $R_{24}$ and $R_{34}$ are as defined above.

8. A photographic recording material which contains at least one development accelerator in at least one silver halide emulsion layer or in a colloid layer adjacent to this layer, wherein the development accelerator contains recurring units of the formula

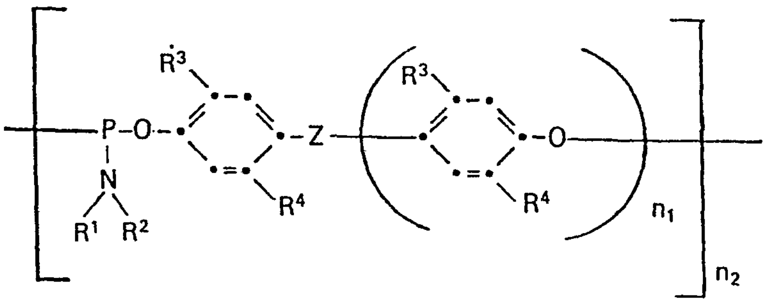

(7)

in which $R^1$ and $R^2$ independently of each other are alkyl having 1 to 12 carbon atoms each or phenyl which is unsubstituted or substituted by alkyl having 4 to 8 carbon atoms and $R^3$ and $R^4$ independently of each other are hydrogen or alkyl having 1 to 8 carbon atoms each, Z is oxygen or sulfur, $n_1$ is 0, 1 or 2, and $n_2$ is an integer from 1 to 100.

9. A photographic recording material which contains at least one development accelerator in at least one silver halide emulsion layer or in a colloid layer adjacent to this layer, wherein the development accelerator is of the formula

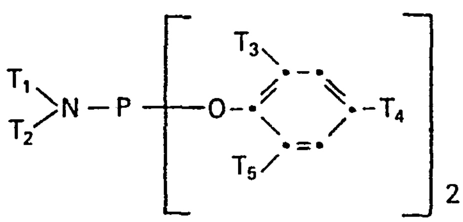

(8)

in which $T_1$ is alkyl having 1 to 12 carbon atoms and $T_2$ is a radical of the formula

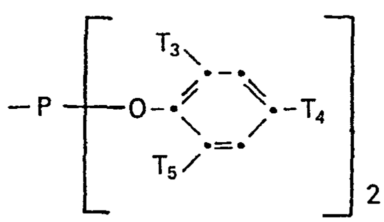

or $T_1$ and $T_2$ are unsubstituted or substituted alkylene having 4 to 12 carbon atoms or form, together with the nitrogen atom to which they are bonded, radicals of the formulae

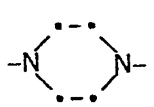

or

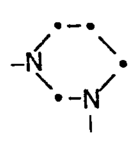

which are substituted, at the further nitrogen atom, by a radical of the formula

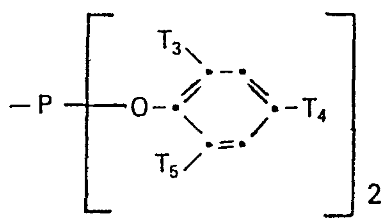

and $T_3$, $T_4$ and $T_5$ independently of on another are hydrogen or alkyl having 1 to 12 carbon atoms each.

10. A photographic recording material according to claim 9, wherein the development accelerator is of the formula

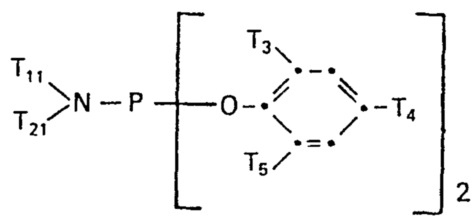

(9)

in which $T_{11}$ is alkyl having 1 to 6 carbon atoms, $T_{21}$ is a radical of the formula

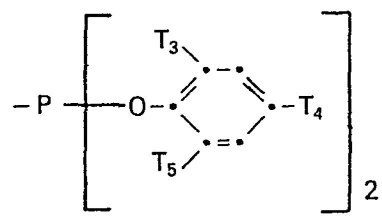

or $T_{11}$ and $T_{21}$ are a group of the formula $-C(CH_3)_2CH_2CH_2CH_2C(CH_3)_2-$ or form, together with the nitrogen atom to which they are bonded, a radical of the formula

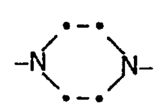

which is substituted, at the further nitrogen atom, by a radical of the formula

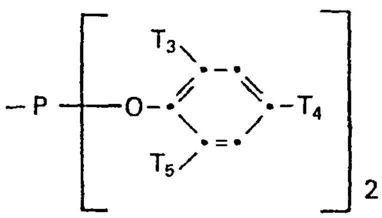

and $T_3$, $T_4$ and $T_5$ are as defined in claim 9.

11. A photographic recording material according to claim 10, wherein the development accelerator is of the formula

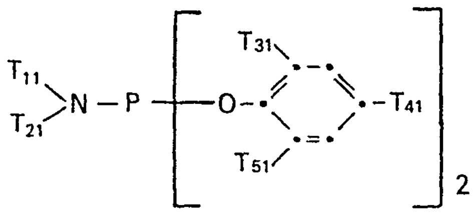

(10)

in which each of $T_{31}$, $T_{41}$ and $T_{51}$ is hydrogen or alkyl having 4 to 8 carbon atoms each, and $T_{11}$ and $T_{21}$ are as defined in claim 10.

12. A compound of the formula

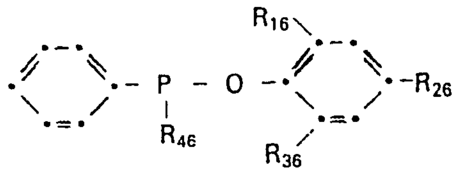

(11)

in which $R_{16}$, $R_{26}$ and $R_{36}$ independently of one another are alkyl having 1 to 16 carbon atoms each or unsubstituted or substituted alkoxy having 1 to 18 carbon atoms each, and $R_{26}$ is additionally a radical of the formula

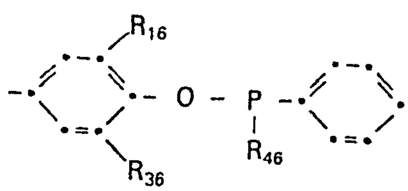

in which $R_{16}$ and $R_{36}$ are as defined above, and $R_{46}$ is unsubstituted or substituted phenoxy or unsubstituted or substituted amino, with the proviso that at least one of the substituents at the phenoxy radical $R_{46}$ is different from methyl, isopropyl and tert-butyl.

13. A compound according to claim 12, wherein $R_{16}$, $R_{26}$ and $R_{36}$ independently of one another are alkyl having 4 to 8 carbon atoms or alkoxy which has 4 to 8 carbon atoms and is unsubstituted or substituted by alkoxycarbonyl having 2 or 3 carbon atoms, and $R_{26}$ is additionally a radical of the formula

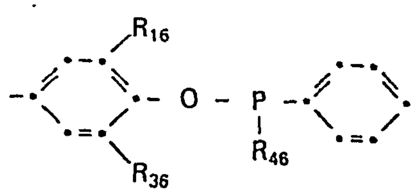

in which $R_{16}$ and $R_{36}$ are as defined above, and $R_{46}$ is phenoxy which is substituted in the 2-, 4- and 6-position by alkyl radicals having 4 to 8 carbon atoms each, or is a radical of the formula

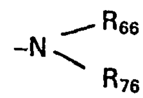

in which $R_{66}$ is alkyl having 1 to 8 carbon atoms and $R_{76}$ is a radical of the formula

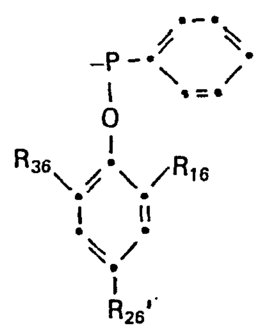

in which $R_{16}$ and $R_{36}$ are as defined above and $R_{26}'$ has the same meaning as $R_{16}$ and $R_{36}$, with the proviso that at least one of the substituents at the phenoxy radical $R_{46}$ is different from tert-butyl.

14. A compound of the formula

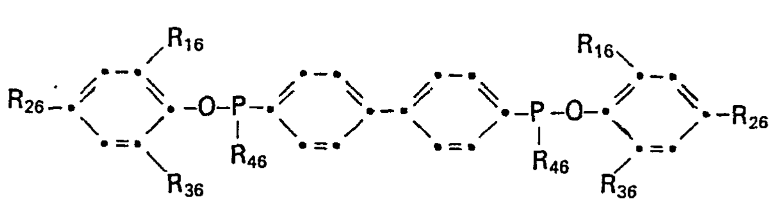

(12)

in which $R_{16}$, $R_{26}$ and $R_{36}$ independently of one another are alkyl having 1 to 16 carbon atoms each or unsubstituted or substituted alkoxy having 1 to 18 carbon atoms each, $R_{46}$ is unsubstituted or substitued phenoxy or unsubstituted or substituted amino.

15. A compound according to claim 14, wherein $R_{16}$, $R_{26}$ and $R_{36}$ independently of one another are alkyl having 4 to 8 carbon atoms or alkoxy which has 4 to 8 carbon atoms and is unsubstituted or substituted by alkoxycarbonyl having 2 or 3 carbon, atoms, and $R_{46}$ is phenoxy which is substituted in the 2-, 4- and 6-position by alkyl radicals having 4 to 8 carbon atoms each, or is a radical of the formula

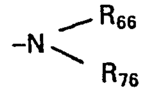

in which $R_{66}$ is alkyl having 1 to 8 carbon atoms and $R_{76}$ is a radical of the formula

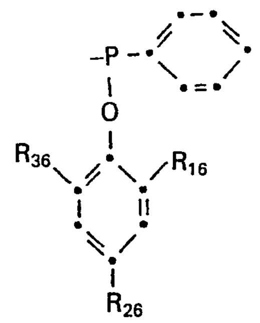

in which $R_{16}$, $R_{26}$ and $R_{36}$ are as defined above.

16. A compound containing recurring units of the formula

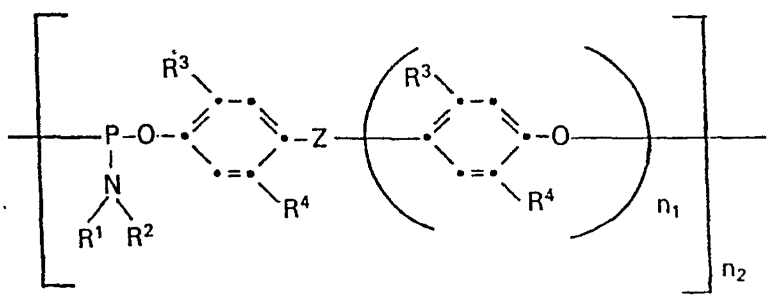

(13)

in which $R^1$, $R^2$, $R^3$, $R^4$, Z, $n_1$ and $n_2$ are as defined in claim 8.

17. A compound of the formula

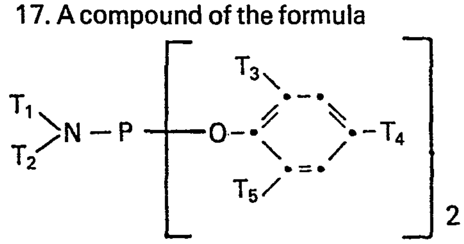

(14)

in which $T_1$, $T_2$, $T_3$, $T_4$ and $T_5$ are as defined in claim 9.

18. Use of the photographic recording material according to any one of claims 1 to 11 for producing photographic images.

19. A developing bath for photographic recording material, which contains, per litre of solution, a development accelerator according to any one of formulae (1) to (10) and (3a) in an amount of 0.5 to 10 g.

20. A process for preparing a photographic recording material according to any one of claims 1 to 10, wherein a development accelerator as defined in these claims is incorporated into a layer of the photographic recording material.